# EUROPEAN PATENT SPECIFICATION

(11) **EP 3 260 397 B1**
(45) Date of publication and mention of the grant of the patent: **22.09.2021**
(21) Application number: 16752359.6
(22) Date of filing: 09.02.2016
(51) Int. Cl.: B65G 35/06, B23Q 7/00, B23Q 41/02, B65D 19/38, B23Q 7/14, B65G 15/42, B65G 37/02, B65G 47/52

(54) **PALLET FOR WORK PIECE TRANSPORTATION**
PALETTE ZUM WERKSTÜCKTRANSPORT
PALETTE POUR TRANSPORT DE PIÈCE À TRAVAILLER

(30) Priority: 16.02.2015 JP 2015027208
(43) Date of publication of application: 27.12.2017
(73) Proprietor: NITTOKU Co., Ltd., Saitama-city, Saitama (JP)
(72) Inventor: SUZUKI, Ikuo, Fukushima-shi Fukushima 960-1393 (JP)
(74) Representative: Grünecker Patent- und Rechtsanwälte PartG mbB
(86) International application number: PCT/JP2016/053840
(87) International publication number: WO 2016/132973

(56) References cited:
- EP-A1- 2 316 758
- DE-C- 436 107
- JP-A- 2011 218 495
- JP-A- 2011 256 011
- JP-A- 2014 200 887
- JP-A- 2014 200 887

## Description

### TECHNICAL FIELD

The present invention relates to a work conveying pallet which is conveyed to a work station by a pallet conveying apparatus while carrying a work.

### BACKGROUND ART

Conventionally, a pallet conveying apparatus is known which mounts works to be processed on pallets and conveys the pallets together with the works in a manufacturing line. In the pallet conveying apparatus, a machine tool in a processing station at a conveyance destination performs a predetermined processing on the works mounted on the pallets. The present applicant proposed a pallet conveying apparatus for conveying a plurality of pallets (work conveying pallets) carrying works with respect to a processing station along a rectangular track (see, for example, JP2011-93032A).

The work conveying pallet conveyed by this pallet conveying apparatus includes a base in the form of a flat plate carrying a work, a linear motion block provided on the base and configured to be movable on a guide rail provided along a conveyance path and a locking member provided on one arbitrary surface of the base and to be locked to the pallet conveying apparatus. The pallet conveying apparatus for conveying such a pallet includes a toothed belt in which recesses and projections are alternately connected one after another in a longitudinal direction along the rail on which the pallet is movably mounted. The locking member of the pallet is formed with projections and recesses engageable with the recesses and projections of the toothed belt. The pallet is conveyed by circulating the toothed belt with the projections and
recesses of the locking member engaged with the projections and recesses.

The pallet conveying apparatus having such a structure is for conveying the pallet along the rectangular track. When the toothed belt is circulated, the projections and recesses formed on the locking member of the pallet are engaged with the recesses and projections at an arbitrary position of the toothed belt. Thus, it can be expected to increase a work conveying speed and positioning accuracy while preventing a deviation of the pallet with respect to the toothed belt and easily change a pallet conveying pitch.

Patent document JP 2011256011A discloses the preamble of claim 1 and patent document DE 436107C discloses a further pallet conveyance apparatus according to the prior art.

### SUMMARY OF INVENTION

However, in the case of providing a plurality of types of work stations for performing different processings along the pallet conveyance path, a processing time for the work mounted on the pallet may differ in each work station. In the presence of a work station with a relatively long processing time, it is supposed to convey the pallets carrying the works along a rectangular track. In such a case, in the work station having a relatively long processing time, there is a trouble that congestion of the pallets finished with the processing in a relatively short processing time in a previous different work station is caused and efficient processing becomes difficult.

Thus, it is convenient if a single conveyance path along which another work station where processing is finished in a relatively short time is present can be connected to a plurality of conveyance paths along which work stations having a relatively long processing time are present. However, it is difficult to change the conveyance path of the pallets and connect the single conveyance path to a new conveyance path so as to collect the pallets in the single conveyance path. Further, there have been conventionally no such pallet conveying apparatuses.

Here, if the pallet conveying apparatus can easily change the pallet conveyance path, it is also possible to connect a single conveyance path to the plurality of conveyance paths. For example, it becomes also possible to convey a plurality of types of works having different contents of processing along a single conveyance path and, thereafter, sort them to a plurality of conveyance paths separately provided for each content of processing. Thus, the pallet conveying apparatus capable of easily changing the pallet conveyance path is preferable.

The present invention was developed, focusing on such a problem and aims to provide a work conveying pallet enabling a conveyance path to be easily changed.

According to one aspect of the present invention, a pallet conveying apparatus for conveying the work conveying pallet includes a plurality of guide rails configured such that the work conveying pallet is movably mounted thereon, a pallet feeding part configured to convey the work conveying pallet along the plurality of guide rails, and a pallet moving part configured to move the work conveying pallet from one guide rail out of the plurality of guide rails to another guide rail, wherein the pallet feeding part includes a circulation belt provided along the plurality of guide rails, the circulation belt being configured to circulate in a predetermined direction, the work conveying pallet includes: a base in the form of a flat plate having front and back principal surfaces and a plurality of side surfaces, the front and back principal surfaces being configured to carry a work; locking members provided on at least two surfaces out of the front and back principal surfaces and the plurality of side surfaces of the base, the locking members being configured to be locked to the circulation belt; the pallet feeding part is configured to convey the work conveying pallet on the one guide rail with the locking member provided on the one surface locked to the circulation belt and is configured to convey the work conveying pallet on the other guide rail with the locking member provided on the other surface locked to the circulation belt; and the pallet moving part includes a short rail configured such that the work conveying pallet is movably mounted thereon from the one guide rail and an auxiliary belt configured to be locked to the locking member provided on the other surface of the work conveying pallet mounted on the short rail.

### BRIEF DESCRIPTION OF DRAWINGS

FIG. 1 is a plan view of a work conveying pallet in a first embodiment of the present invention,
FIG. 2 is an enlarged view of a section C of FIG. 5,
FIG. 3 is a top view showing a first pallet conveying apparatus for conveying pallets,
FIG. 4 is an arrow view along line A-A of FIG. 3,
FIG. 5 is a sectional view along line B-B of FIG. 3,
FIG. 6 is a sectional view along line E-E of FIG. 3,
FIG. 7 is a sectional view along line F-F of FIG. 3,
FIG. 8 is a sectional view along line G-G of FIG. 3,
FIG. 9 is a sectional view along line H-H of FIG. 3,
FIG. 10 is a sectional view along line J-J of FIG. 5,
FIG. 11 is a top view showing a pallet conveying apparatus in a second embodiment of the present invention,
FIG. 12 is a sectional view along line K-K of FIG. 11,
FIG. 13 is a sectional view along line L-L of FIG. 11,
FIG. 14 is a sectional view along line M-M of FIG. 11,
FIG. 15 is a sectional view along line N-N of FIG. 11,
FIG. 16 is a perspective view showing a moving part for moving a work conveying pallet of the present invention while turning the work conveying pallet by 180°,
FIG. 17 is a perspective view, corresponding to FIG. 16, showing another moving part for moving the work conveying pallet of the present invention FIG. 18 is a perspective view showing a moving part for obliquely moving the work conveying pallet of the present invention, and
FIG. 19 is a perspective view, corresponding to FIG. 18, showing a moving part for obliquely moving the work conveying pallet of the present invention while erecting the work conveying pallet.

### DESCRIPTION OF EMBODIMENTS

Hereinafter, one embodiment of the present invention is described with reference to the accompanying drawings.

### (First Embodiment)

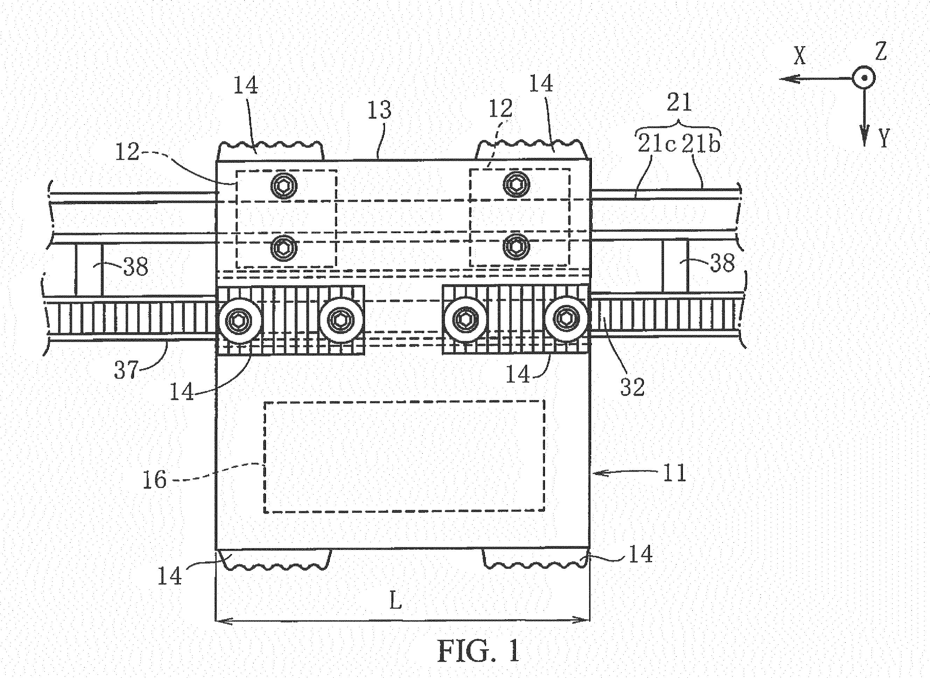

A work conveying pallet and a pallet conveying apparatus in a first embodiment of the present invention are described with reference to FIGS. 1 to 10.

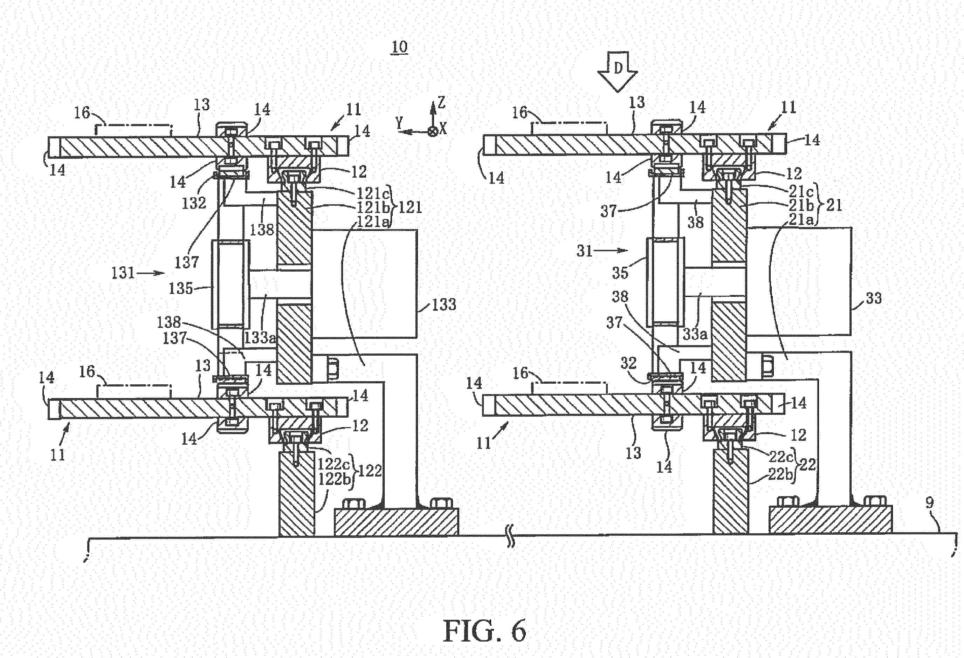

A work conveying pallet 11 of the present embodiment includes, as shown in FIGS. 1 and 6, a base 13 in the form of a flat plate composed of front and back principal surfaces for carrying an unillustrated work and a plurality of side surfaces, linear motion blocks 12 provided on the base 13 and configured to be movable on a plurality of guide rails 21, 22, 121 and 122 provided along a conveyance path of a pallet conveying apparatus 10 to be described later, and locking members 14 to which later-described circulation belts 32, 132 of the pallet conveying apparatus 10 are to be locked.

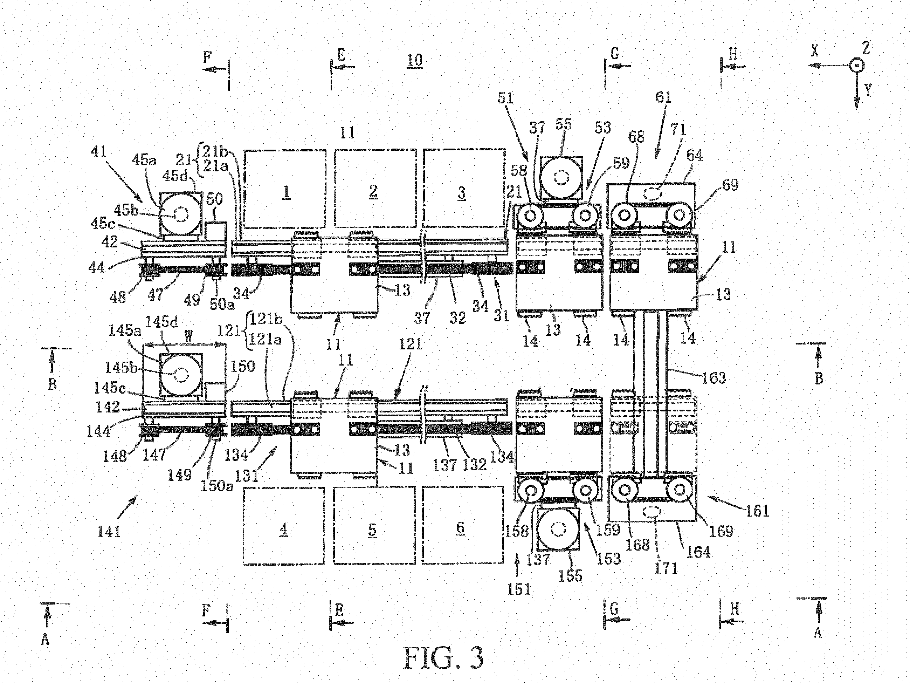

Specifically, as further shown in FIGS. 3 to 5, the work conveying pallet 11 includes the linear motion blocks 12 configured to be movable on corresponding first to fourth guide rails 21, 22, 121 and 122 across linear motion guide rails 21c, 22c, 121c and 122c, the base 13 screwed to the linear motion blocks 12 and a plurality of locking members 14 provided on the base 13.

The linear motion blocks 12 may be commercially available ones sold together with the linear motion guide rails 21c, 22c, 121c and 122c and preferably include unillustrated roller retainers. By using the linear motion blocks 12 with the roller retainers, frictional resistance when the work conveying pallet 11 moves on the first to fourth guide rails 21, 22, 121 and 122 can be drastically reduced while movements of the linear motion blocks 12 in a width direction (Y-axis direction) and the inclination thereof with respect to each linear motion guide rail 21c, 22c, 121c, 122c are prohibited.

A mounting tool 16 for mounting an unillustrated work is assumed to be provided on one side part of the base 13. This mounting tool 16 is provided on the base 13 and used to stably mount the unillustrated work on the base 13. This mounting tool 16 is used with the structure thereof appropriately changed depending on the type of the work to be mounted on the work conveying pallet 11 and desired to be processed. In the work conveying pallet 11 of the present embodiment, the linear motion blocks 12 are fixed to the other side part on a surface of the base 13 as shown in FIG. 1.

A characteristic configuration of the work conveying pallet 11 of the present embodiment is that the locking members 14 are provided on at least two surfaces out of the front and back principal surfaces and the plurality of side surfaces of the base 13. Particularly, the locking members 14 are preferably provided on at least one surface out of the front and back principal surfaces and at least one of the plurality of side surfaces of the base 13.

In the present embodiment, the locking members 14 of the work conveying pallet 11 are respectively provided on the both principal surfaces of the base 13 between the linear motion blocks 12 and the mounting tool 16 and both side surfaces facing in the Y-axis direction of the base 13. Here, in the present embodiment, the locking members 14 provided on the both principal surfaces of the base 13 may be referred to as first locking members 14 and the locking members 14 provided on the both side surfaces of the base 13 may be referred to as second locking members 14.

In the work conveying pallet 11 thus configured, the locking members 14 to which the circulation belts 32, 132 of the pallet conveying apparatus 10 are to be locked are provided on at least two surfaces out of the front and back principal surfaces and the plurality of side surfaces of the base 13. Thus, the pallet conveying apparatus 10 can convey the work conveying pallet 11 while locking the work conveying pallet 11 on at least one or both of those two surfaces. Specifically, the work conveying pallet 11 can be locked by one locking member 14 and conveyed in one direction. In this state, the work conveying pallet 11 can also be locked by another locking member 14 and conveyed in another direction.

Thus, according to the work conveying pallet 11 of the present embodiment, the conveyance path can be easily changed as compared to conventional pallets provided with a locking member only on one arbitrary surface of a base, and a degree of freedom in designing the pallet conveying apparatus 10 for conveying the work conveying pallet 11 can be increased.

An example of the pallet conveying apparatus 10 for conveying the work conveying pallet 11 of the present embodiment is specifically shown in FIGS. 3 to 10. In each figure, three axes of X, Y and Z orthogonal to each other are set, wherein it is assumed that an X axis extends substantially in a horizontal lateral direction, a Y axis extends substantially in a horizontal front-back direction and a Z axis extends in a vertical direction. The configuration of the pallet conveying apparatus 10 is described below using X, Y and Z directions.

The pallet conveying apparatus 10 of the present embodiment conveys the work conveying pallet 11 carrying a work, stops the work conveying pallet 11 before machine tools 1 to 6 (see FIG. 3) installed along a conveyance path thereof, and holds the work carried on that pallet 11 at predetermined positions. The pallet conveying apparatus 10 is used such as in the case of processing the work carried on the work conveying pallet 11 by those machine tools 1 to 6.

It should be noted that the number of machine tools 1 to 6 (see FIG. 3) differs depending on the content of works required to be processed, and the number of the work conveying pallets 11 conveyed at one time may be appropriately increased or decreased according to the number of the machine tools 1 to 6.

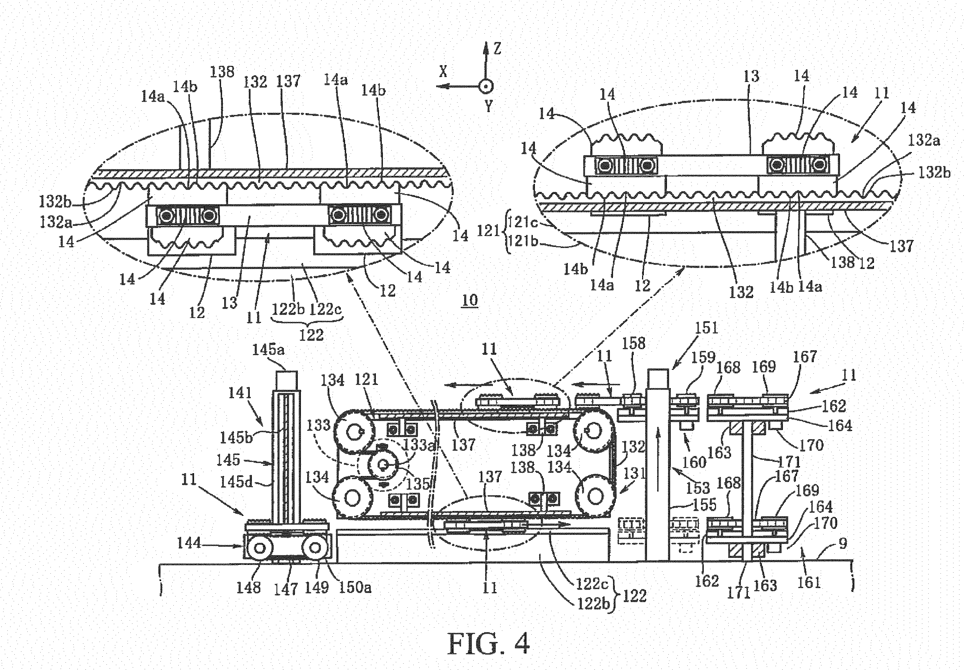

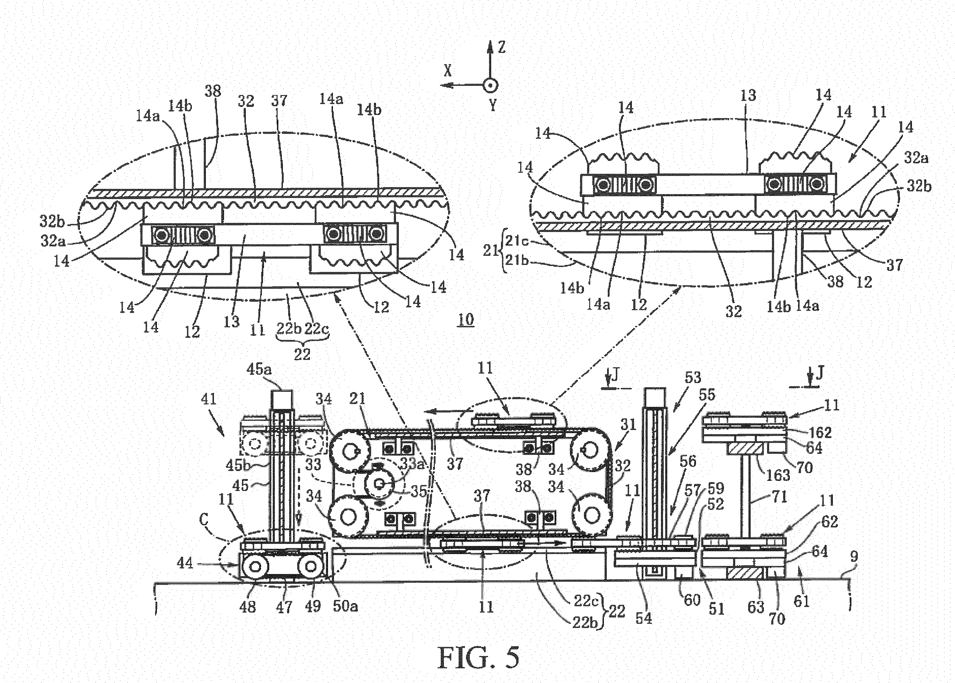

As shown in FIGS. 4 and 5, the pallet conveying apparatus 10 of the present embodiment includes a plurality of guide rails 21, 22, 121 and 122 for movably mounting the work conveying pallets 11. The plurality of guide rails 21, 22, 121 and 122 include a first guide rail 21, a second guide rail 22, a third guide rail 121 and a fourth guide rail 122.

As shown in FIG. 6, a case where the pallet conveying apparatus 10 includes the first and third guide rails 21, 121 separated in the Y-axis direction and extending in parallel to each other in the X-axis direction and the second and fourth guide rails 22, 122 at a predetermined interval in the Z-axis direction from the first and third guide rails 21, 121 and provided in parallel to each other is shown in the present embodiment.

It should be noted that, in the first to fourth guide rails 21, 22, 121 and 122, a positional relationship of the first and second guide rails 21, 22 or a positional relationship of the third and fourth guide rails 121, 122 is an upper-and-lower positional relationship if the Z-axis direction of FIG. 3 is a vertical direction. Further, if the Y-axis direction is a facing direction, the first or second guide rail 21, 22 and the third or fourth guide rail 121, 122 are positioned on one side and on the other side. As just described, the first and third guide rails 21, 121 are provided substantially on the same plane and the second and fourth guide rails 22, 122 are provided substantially on the same plane.

In the present embodiment, the first guide rail 21 may be referred to as an "upper position on the one side", the second guide rail 22 as a "lower position on the one side", the third guide rail 121 as an "upper position on the other side" and the fourth guide rail 122 as a "lower position on the other side". Further, the first and second guide rails 21, 121 may be referred to as an "upper position" and the second and fourth guide rails 22, 122 as a "lower position".

Each of the second and fourth guide rails 22, 122 located below is for mounting the work conveying pallets 11 in a horizontal state. The second and fourth guide rails 22, 122 respectively include second and fourth supporting plates 22b, 122b directly fixed on a mount 9 and commercially available second and fourth linear motion guide rails 22c, 122c fixed to the upper edges of the second and fourth supporting plates 22b, 122b by screwing.

The first and third guide rails 21, 121 located above are for mounting the work conveying pallets 11 in a horizontal state similarly to the second and fourth guide rails 22, 122. The first and third guide rails 21, 121 respectively include first and third supporting plates 21b, 121b provided side by side above the second and fourth supporting plates 22b, 122b via brackets 21a, 121a fixed onto the mount 9 and commercially available first and third linear motion guide rails 21c, 121c fixed to the upper edges of the first and third supporting plates 21b, 121 by screwing.

The first and third guide rails 21, 121 and the second and fourth guide rails 22, 122 are separated in the Y-axis direction at an interval larger than a length of each work conveying pallet 11 in the Y-axis direction, and respectively provided to extend in the X-axis direction in parallel to each other.

Here, the first to fourth linear motion guide rails 21c, 22c, 121c and 122c of the first to fourth guide rails 21, 22, 121 and 122 have the same shape. Thus, even if the work conveying pallet 11 mounted on any one of the first to fourth guide rails 21, 22, 121 and 122 is moved to and mounted on the other guide rail 21, 22, 121 or 122, that work conveying pallet 11 is movable on this other guide rail 21, 22, 121 or 122.

In the work conveying pallet 11 of the present embodiment, the linear motion blocks 12 are fixed to the one side part on the surface (back side in FIG. 1) of the base 13 as shown in FIG. 1. Thus, by movably supporting the linear motion blocks 12 across any one of the corresponding first to fourth linear motion guide rails 21c, 22c, 121c and 122c of the first to fourth guide rails 21, 22, 121 and 122, the work conveying pallet 11 is movably mounted on each guide rail 21, 22, 121, 122 in a horizontal state.

Referring back to FIGS. 3 to 5, the pallet conveying apparatus 10 includes first and second pallet feeding parts 31, 131 for conveying (moving) the work conveying pallets 11 respectively mounted on the first to fourth guide rails 21, 22, 121 and 122 along the first to fourth guide rails 21, 22, 121 and 122.

The first pallet feeding part 31 provided to correspond to the first and second guide rails 21, 22 has the same structure as the second pallet feeding part 131 provided to correspond to the third and fourth guide rails 121, 122.

Specifically, the first pallet feeding part 31 includes an endless first circulation belt 32 provided along the first and second guide rails 21, 22 and configured to circulate in a predetermined direction, and a first circulating mechanism 33 for circulating the first circulation belt 32. Further, the second pallet feeding part 131 includes an endless second circulation belt 132 provided along the third and fourth guide rails 121, 122 and configured to circulate in a predetermined direction, and a second circulating mechanism 133 for circulating the second circulation belt 132.

As shown in FIGS. 4 and 5, at least two supporting columns (not shown) are provided on each of the second and fourth supporting plates 22b, 122b of the second and fourth guide rails 22, 122, and four driven pulleys 34, 134 are rotatably supported via these supporting columns. Each of the first and second circulation belts 32, 132 is mounted to enclose these four driven pulleys 34, 134.

Further, as shown in FIG. 6, servo motors 33, 133, which are first and second circulating mechanisms for circulating the first or second circulation belt 32, 132, are respectively provided on the first and third supporting plates 21b, 121b. Drive pulleys 35, 135 are respectively provided on rotary shafts 33a, 133a of the servo motors 33, 133.

The drive pulley 35, 135 is provided on the same plane as the corresponding four driven pulleys 34, 134. The servo motors 33, 133 are mounted on the first and second supporting plates 21b, 121b to turn the first or second circulation belt 32, 132 between a pair of vertically adjacent driven pulleys 34, 134 on one side and mount the first or second circulation belt 32, 132 on the drive pulleys 35, 135.

When the servo motors 33, 133 are driven by a command from an unillustrated controller, the rotary shafts 33a, 133a rotate together with the drive pulleys 35, 135. The first or second circulation belt 32, 132 mounted on the drive pulleys 35, 135 circulates while enclosing the four driven pulleys 34, 134.

The first and second circulation belts 32, 132 provided to correspond to the first and second pallet feeding parts 31, 131 are so-called toothed belts having the same structure. The first and second circulation belts 32, 132 are such belts that recesses and projections 32a, 32b, 132a, 132b, which are trough and crest parts extending in the width direction, are alternately connected in a longitudinal direction as shown in each enlarged view of FIGS. 4 and 5. The work conveying pallet 11 is formed with projections and recesses 14a, 14b engageable with the recesses and projections 32a, 32b, 132a, 132b. The projections and recesses 14a, 14b are formed on the first locking members 14 constituting the work conveying pallet 11.

The first locking members 14 are respectively provided on the both principal surfaces of the pedestal 13. If the work conveying pallet 11 is mounted on the second or fourth guide rail 22, 122 located on a vertically lower side, the first locking members 14 provided on an upper side of the pedestal 13 are engaged with the first or second circulation belt 32, 132. On the other hand, if the work conveying pallet 11 is mounted on the first or third guide rail 21, 121 located on a vertically upper side, the first locking members 14 provided on a lower side of the pedestal 13 are engaged with the first or second circulation belt 32, 132 similarly to the linear motion block 12. As just described, the driven pulleys 34, 134 are provided at four corners of the second supporting plates 22b, 122b to circulate the first and second circulation belts 32, 132.

Thus, the first to fourth guide rails 21, 22, 121 and 122 of this pallet conveying apparatus 10 are configured to include the first and third guide rails 21, 121 provided along the recesses and projections 32a, 32b, 132a, 132b facing in one direction of the first and second circulation belts 32, 132, i.e. facing upward and located on the vertically upper side and the second and fourth guide rails 22, 122 provided along the recesses and projections 32a, 32b, 132a, 132b facing in a direction opposite to the one direction, i.e. facing downward in the present embodiment and located on the vertically lower side.

When the first locking members 14 of the work conveying pallet 11 come into contact with the first or second circulation belt 32, 132, the recesses and projections 32a, 32b, 132a, 132b formed on the first or second circulation belt 32, 132 are engaged with the projections and recesses 14a, 14b formed on the first locking members 14. Further, when the first or second circulation belt 32, 132 sinks to be separated from the first locking members 14 along the driven pulley 34, 134, the recesses and projections 32a, 32b, 132a, 132b of the first or second circulation belt 32, 132 and the projections and recesses 14a, 14b of the first locking members 14 are disengaged. The pallet conveying apparatus 10 of the present embodiment is configured as just described.

Here, as shown in FIGS. 4 and 5, first and second supporting members 37, 137 for preventing the slack of the first and second circulation belts 32, 132 and the separation of the first and second circulation belts 32, 132 from the first locking members 14 are provided between the upper two driven pulleys 34, 134 and between the lower two driven pulleys 34, 134. The first and second supporting members 37, 137 are mounted on the second supporting plates 22b, 122b via attachments 38, 138.

As shown in the enlarged views of FIGS. 4 and 5, when the projections and recesses 14a, 14b of the first locking members 14 are engaged with the recesses and projections 32a, 32b, 132a, 132b of the first or second circulation belt 32, 132, a movement of the work conveying pallet 11 in the X-axis direction independent of the rotation of the first or second circulation belt 32, 132 is prohibited. Thus, when the first or second circulation belt 32, 132 having the work conveying pallet 11 engaged therewith is circulated, the work conveying pallet 11 moves together with the first or second circulation belt 32, 132. In this way, the work conveying pallet 11 is conveyed along the first to fourth guide rail 21, 22, 121, 122 adjacent to the first or second circulation belt 32, 132.

In the present embodiment, when the first or second circulation belt 32, 132 is circulated, the work conveying pallet 11 mounted on the first or third guide rail 21, 121 located on the vertically upper side and the work conveying pallet 11 mounted on the second or fourth guide rail 22, 122 located on the vertically lower side simultaneously move at the same speed in directions opposite to each other as shown by solid-line arrows of FIGS. 4 and 5.

As shown in FIGS. 3 to 5, First and second pallet moving parts 41, 141 are respectively provided at one end parts of the first to fourth guide rails 21, 22, 121 and 122 provided in parallel to each other. Further, third and fourth pallet moving parts 51, 151 are respectively provided at the other end parts of the first to fourth guide rails 21, 22, 121 122. Fifth and sixth pallet moving parts 61, 161 are respectively provided at end parts of the third and fourth pallet moving parts 51, 151 opposite to the first to fourth guide rails 21, 22, 121 122.

The first and second pallet moving parts 41, 141 provided at the one end parts of the first to fourth guide rails 21, 22, 121 122 lower the work conveying pallet 11 mounted on the first or third guide rail 21, 121 located above to the second or fourth guide rail 22, 122 located on the vertically lower side. Further, conversely, the first and second pallet moving parts 41, 141 may lift the work conveying pallet 11 mounted on the second or fourth guide rail 22, 122 to the first or third guide rail 21, 121. It should be noted that the first and second pallet moving parts 41, 141 have the same structure.

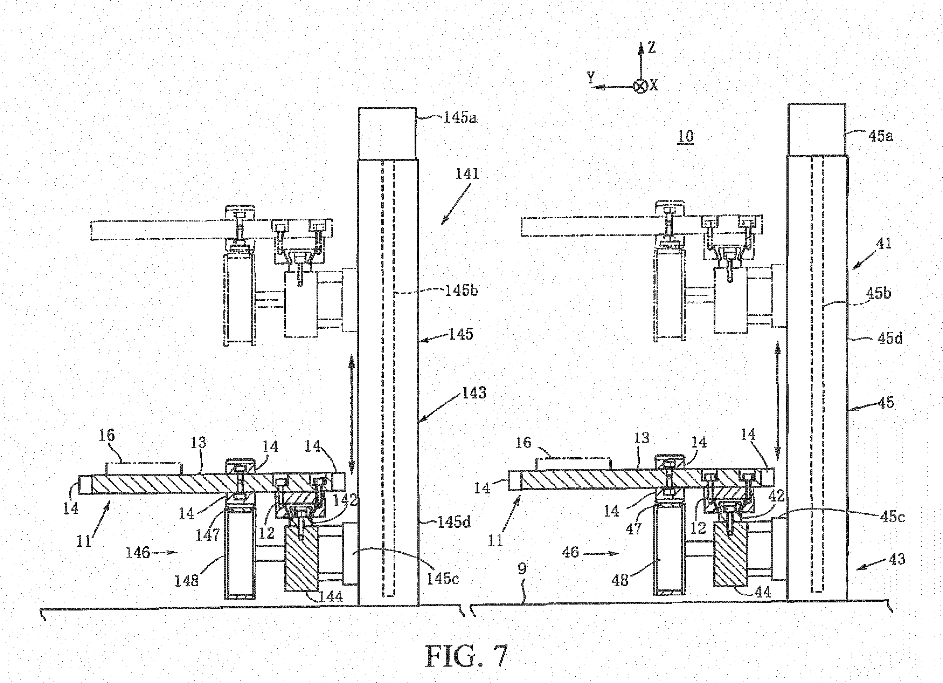

As shown in FIG. 7, the first and second pallet moving parts 41, 141 in the present embodiment respectively include first and second short rails 42, 142 configured such that the work conveying pallet 11 is mountable thereon and first and second rail moving mechanisms 43, 143 for moving the first and second short rails 42, 142 upward or downward between an upper first position and a lower second position. The first position is a position connected to (on the same plane as) the linear motion guide rail 21c, 121c of the first or third guide rail 21, 121. Further, the second position is a position connected to (on the same plane as) the linear motion guide rail 22c, 122c of the second or fourth guide rail 22, 122.

The same rails as the linear motion guide rails 21c, 22c, 121c 122c of the first to fourth guide rails 21, 22, 121 122 are used as the first and second short rails 42, 142. A length W (see FIG. 3) of the first or second short rail 42, 142 in the X-axis direction is equal to or longer than a length L (see FIG. 1) of the work conveying pallet 11 in the X-axis direction.

The first or second short rail 42, 142 is configured to make the work conveying pallet 11 movable between the first or second short rail 42, 142 and the linear motion guide rail 21c, 22c, 121c, 122c when the first or second short rail 42, 142 is connected to the linear motion guide rail 21c, 22c, 121c, 122c of the first to fourth guide rail 21, 22, 121, 122. Specifically, the work conveying pallet 11 separated from the first or second circulation belt 32, 132 and moved from the linear motion guide rail 21c, 22c, 121c, 122c is mounted on the first or second short rail 42, 142. Further, the first or second short rail 42, 142 is configured to make the work conveying pallet 11 mounted thereon movable to the linear motion guide rail 21c, 22c, 121c, 122c.

As shown in FIGS. 3 to 5 and 7, the first and second rail moving mechanisms 43, 143 for vertically moving such first and second short rails 42, 142 include first and second supporting plates 44, 144 (see FIG. 1 or 7) having the first and second short rails 42, 142 respectively mounted on upper edges, and first and second Z-axis direction telescopic actuators 45, 145 for moving the first and second supporting plates 44, 144 in the Z-axis direction with respect to the mount 9.

Each of the first and second Z-axis direction telescopic actuators 45, 145 is composed of a long and narrow box-shaped housing 45d, 145d, a ball screw 45b, 145b provided to extend in a longitudinal direction inside the housing 45d, 145b and to be rotationally driven by servo motors 45a, 145a, a follower 45c, 145c threadably engaged with the ball screw 45b, 145b and configured to parallelly move, and the like. The first and second Z-axis direction telescopic actuators 45, 145 are configured such that the follower 45c, 145c threadably engaged with the ball screw 45b, 145b is movable along the longitudinal direction (vertical direction) of the housing 45d, 145d when the servo motor 45a, 145a is driven to rotate the ball screw 45b, 145b.

In the present embodiment, the first and second supporting plates 44, 144 provided with the first or second short rail 42, 142 are mounted on the followers 45c, 145c of the first and second Z-axis direction telescopic actuators 45, 145 to be movable in the Z-axis direction. The drive of the servo motors 45a, 145a of the first and second telescopic actuators 45, 145 is controlled by the unillustrated controller. Specifically, the servo motors 45a, 145a are connected to the controller, and the first and second rail moving mechanisms 43, 143 are configured to be able to move the first and second short rails 42, 142 upward and downward in the Z-axis direction together with the first and second supporting plates 44, 144 by driving the servo motors 45a, 145a by a command from the controller.

When the first or second short rail 42, 142 is connected to the first to fourth guide rail 21, 22, 121, 122, the work conveying pallet 11 moving on the first to fourth guide rail 21, 22, 121, 122 is movable from the first to fourth guide rail 21, 22, 121, 122 to the first or second short rail 42, 142. Thus, the first and second pallet moving parts 41, 141 respectively include first and second pallet locking mechanisms 46, 146 for limiting movements of the work conveying pallets 11 mounted on the first and second short rails 42, 142.

The first and second pallet locking mechanisms 46, 146 are configured to be engageable with the work conveying pallets 11 mounted on the first and second short rails 42, 142 and respectively include endless first and second auxiliary belts 47, 147 provided to circulate along the first and second short rails 42, 142 and first and second auxiliary circulating mechanisms for circulating the first and second auxiliary belts 47, 147.

Auxiliary pulleys 48, 148 on which the first and second auxiliary belts 47, 147 extending along the first and second short rails 42, 142 are respectively mounted are rotatably supported on one end parts of the first and second supporting plates 44, 144 in the X-axis direction. Further, auxiliary drive pulleys 49, 149 on which the first and second auxiliary belts 47, 147 are respectively mounted are rotatably supported on the other end parts of the first and second supporting plates 44, 144 in the X-axis direction. The first and second auxiliary circulating mechanisms are composed of servo motors 50, 150 (see FIG. 3) respectively mounted on the first and second supporting plates 44, 144. The auxiliary drive pulleys 49, 149 are mounted on rotary shafts 50a, 150a of the servo motors 50, 150. The auxiliary drive pulleys 49, 149 are provided on the same planes as the auxiliary pulleys 48, 148 and, as shown in FIGS. 4 and 5, the first and second auxiliary belts 47, 147 are mounted on the auxiliary drive pulleys 49, 149 and the auxiliary pulleys 48, 148.

When the servo motors 50, 150 are driven by a command from the unillustrated controller, the first and second auxiliary belts 47, 147 are respectively circulated along the first and second short rails 42, 142 via the auxiliary drive pulleys 49, 149 and the auxiliary pulleys 48, 148.

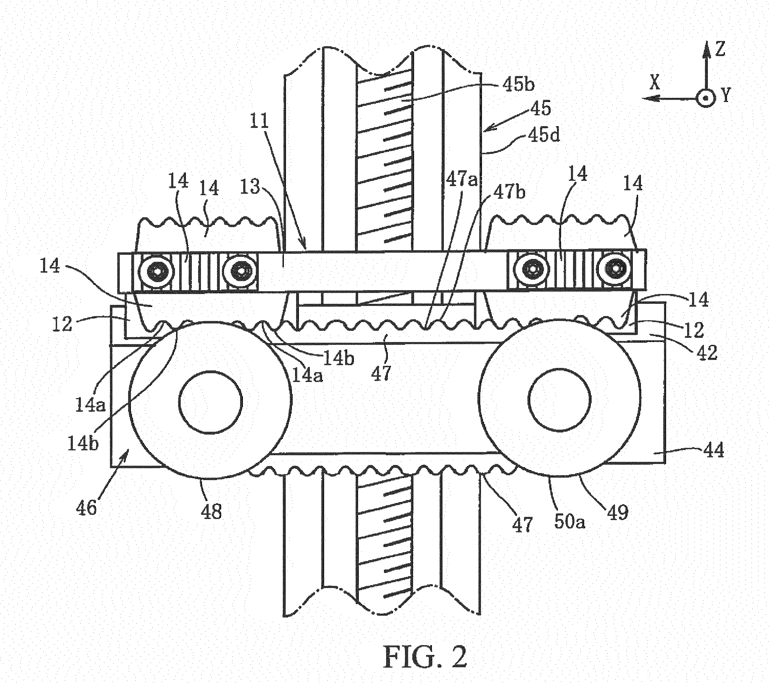

FIG. 2 is an enlarged view of a section C of FIG. 5 and shows the configuration on the side of the first short rail 42 in detail as a representative. The auxiliary belt 47 is a belt in which recesses and projections 47a, 47b having the same shapes as the recesses and projections 32a, 32b of the first circulation belt 32 and extending in the width direction are alternately connected in the longitudinal direction. The first auxiliary belt 47 is configured such that the recesses and projections 47a, 47b thereof are engageable with the projections and recesses 14a, 14b formed on the first locking members 14 provided on the same lower side as the linear motion block 12 of the work conveying pallet 11 when the work conveying pallet 11 is mounted on the first short rail 42. Although not shown, the second auxiliary belt 147 is configured similarly to the first auxiliary belt 47 also on the side of the second short rail 142.

Accordingly, when the first and second circulation belts 32, 132 and the first and second auxiliary belts 47, 147 are circulated at the same speed, the work conveying pallets 11 moving on the first and third guide rails 21, 121 or the second and fourth guide rails 22, 122 are movable to the first or second short rail 42, 142 connected to the first to fourth guide rail 21, 22, 121, 122. Further, the work conveying pallet 11 mounted on the first or second short rail 42, 142 is lifted or lowered between the first or third guide rail 21, 22 located on the vertically upper side and the second or fourth guide rail 22, 122 located on the vertically lower side.

Referring back to FIGS. 3 to 5, the third and fourth pallet moving parts 51, 151 are respectively provided at the other end parts of the first to fourth guide rails 21, 22, 121 122. The third and fourth pallet moving parts 51, 151 lift or lower the work conveying pallet 11 between the first and third guide rails 21, 121 and the second and fourth guide rails 22, 122 similarly to the first and second pallet moving parts 41, 141. However, the third and fourth pallet moving parts 51, 151 are structured differently from the first and second pallet moving parts 41, 141.

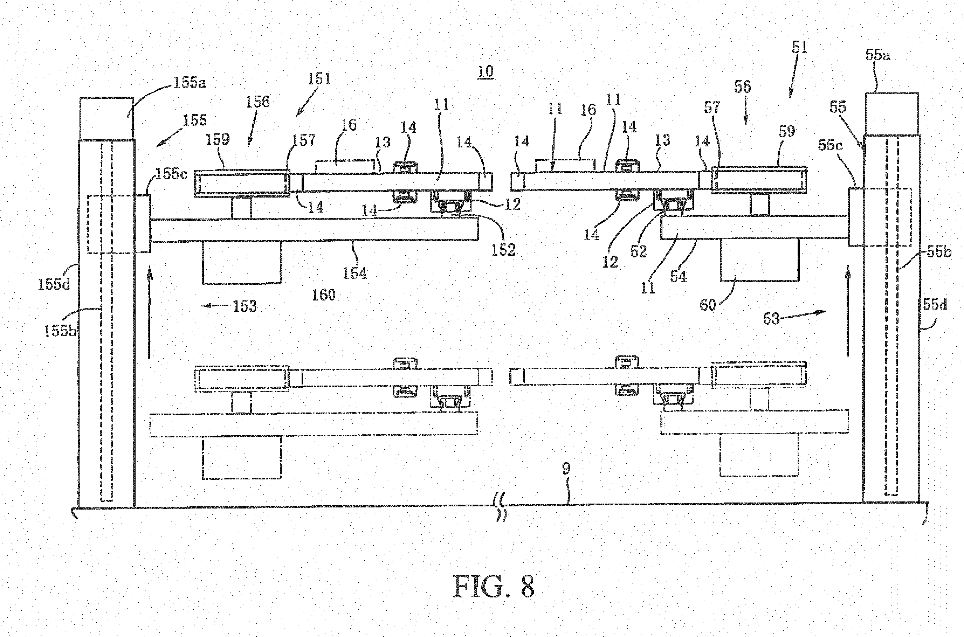

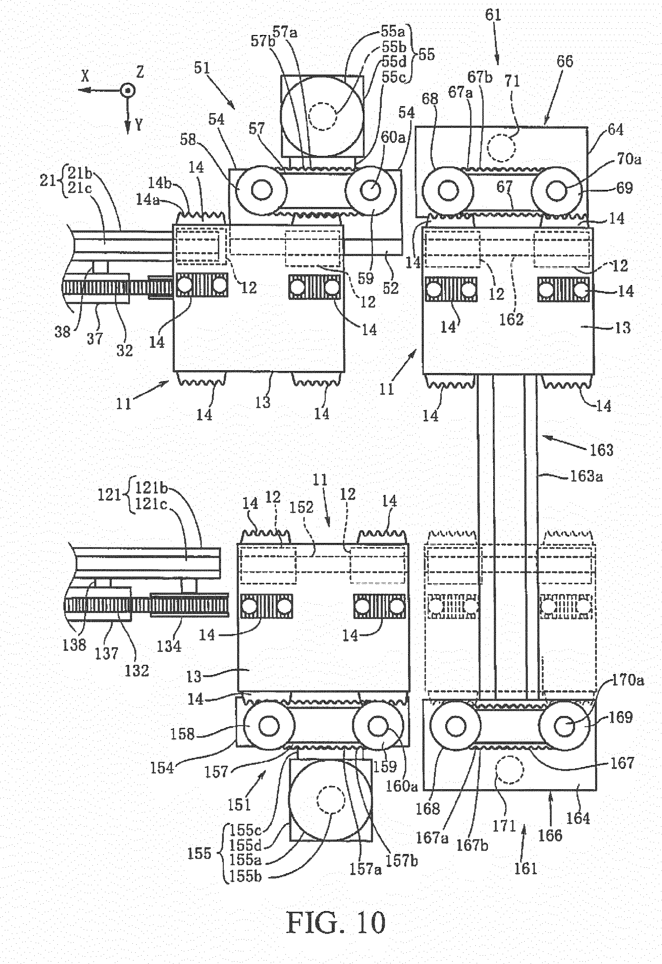

Specifically, as shown in FIGS. 8 and 10, the third and fourth pallet moving parts 51, 151 in the present embodiment respectively include third and fourth short rails 52, 152 configured such that the work conveying pallet 11 is mountable thereon, and third and fourth rail moving mechanisms 53, 153 for lowering or lifting the third and fourth short rails 52, 152 between an upper third position and a lower fourth position. The third position is a position connected to (on the same plane as) the linear motion guide rail 21c, 121c of the third or third guide rail 21, 121. Further, the fourth position is a position connected to (on the same plane as) the linear motion guide rail 22c, 122c of the second or fourth guide rail 22, 122.

The third and fourth short rails 52, 152 have the same structure as the first or second short rail 42, 142 of the first and second pallet moving parts 41, 141. When the third and fourth short rails 52, 152 are connected to the linear motion guide rails 21c, 22c, 121c, 122c of the first to fourth guide rails 21, 22, 121, 122, the work conveying pallets 11 are movable between the third and fourth short rails 52, 152 and the linear motion guide rails 21c, 22c, 121c, 122c. Specifically, the work conveying pallet 11 separated from the first or second circulation belt 32, 132 and moved from the linear motion guide rail 21c, 22c, 121c, 122c is mounted on the third and fourth short rails 52, 152. Further, the third and fourth short rails 52, 152 move the work conveying pallets 11 mounted thereon to the linear motion guide rails 21c, 22c, 121c, 122c.

As shown in FIGS. 3 to 5, 8 and 10, the third and fourth rail moving mechanisms 53, 153 for vertically moving such third and fourth short rails 52, 152 respectively include horizontal third and fourth supporting plates 54, 154 having the third and fourth short rails 52, 152 mounted on end edges, and third and fourth Z-axis direction telescopic actuators 55, 155 for moving the third and fourth supporting plates 54, 154 in the Z-axis direction with respect to the mount 9.

The third and fourth Z-axis direction telescopic actuators 55, 155 have the same configurations as the first and second Z-axis direction telescopic actuators 45, 145 of the first and second pallet moving parts 41, 141. Thus, repeated description is omitted.

In the present embodiment, the third and fourth supporting plates 54, 154 on which the third and fourth short rails 52, 152 are provided are attached to followers 55c, 155c of the third and fourth Z-axis direction telescopic actuators 55, 15 to be movable in the Z-axis direction. The drive of servo motors 55a, 155a of the third and fourth Z-axis direction telescopic actuators 55, 155 is controlled by the unillustrated controller. Specifically, the servo motors 55a, 155a are connected to the controller, and the third and fourth rail moving mechanisms 53, 153 are configured to be able to lift and lower the third and fourth short rails 52, 152 in the Z-axis direction together with the third and fourth supporting plates 54, 154 by driving the servo motors 55a, 155a by a command from the controller.

When the third and fourth short rails 52, 152 are connected to the first to fourth guide rails 21, 22, 121, 122, the work conveying pallets 11 moving on the first to fourth guide rails 21, 22, 121, 122 can move from the first to fourth guide rails 21, 22, 121, 122 to the third and fourth short rails 52, 152. To this end, the third and fourth pallet moving parts 51, 151 respectively include third and fourth pallet locking mechanisms 56, 156 for limiting movements of the work conveying pallets 11 mounted on the third and fourth short rails 52, 152.

The third and fourth pallet locking mechanisms 56, 156 are configured to be engageable with the work conveying pallets 11 mounted on the third and fourth short rails 52, 152 and respectively include endless third and fourth auxiliary belts 57, 157 configured to circulate along the third and fourth short rails 52, 152 and third and fourth auxiliary circulating mechanisms for circulating the third and fourth auxiliary belts 57, 157.

Auxiliary pulleys 58, 158 on which the third and fourth auxiliary belts 57, 157 extending along the third and fourth short rails 52, 152 are respectively mounted are rotatably supported on one end parts of the third and fourth supporting plates 54, 154 in the X-axis direction. Further, auxiliary drive pulleys 59, 159 on which the third and fourth auxiliary belts 57, 157 are respectively mounted are rotatably supported on the other end parts of the third and fourth supporting plates 54, 154 in the X-axis direction.

The third and fourth auxiliary circulating mechanisms are composed of servo motors 60, 160 mounted on the third and fourth supporting plates 54, 154. The auxiliary drive pulleys 59, 159 are mounted on rotary shafts 60a, 160a of the servo motors 60, 160. The auxiliary drive pulleys 59, 159 are provided on the same plane as the auxiliary pulleys 58, 158 and the third and fourth auxiliary belts 57, 157 are respectively mounted on the auxiliary drive pulleys 59, 159 and the auxiliary pulleys 58, 158.

When the servo motors 60, 160 are driven by a command from the unillustrated controller, the third and fourth auxiliary belts 57, 157 are respectively circulated along the third and fourth short rails 52, 152 via the auxiliary drive pulleys 59, 159 and the auxiliary pulleys 58, 158.

As shown in FIG. 10, the third and fourth auxiliary belts 57, 157 are belts in which recesses and projections 57a, 57b, 157a, 157b having the same shapes as in the first and second circulation belts 32, 132 and extending in the width direction are alternately connected in a longitudinal direction. The third and fourth auxiliary belts 57, 157 are configured such that the recesses and projections 57a, 57b, 157a, 157b thereof are engageable with the projections and recesses 14a, 14b formed on the second locking members 14 provided on the side surfaces (side edges) of the pedestals 13 of the work conveying pallets 11 when the work conveying pallets 11 are mounted on the third and fourth short rails 52, 152.

Specifically, one principal surfaces of the third and fourth auxiliary pulleys 57, 157 provided with the recesses and projections 57a, 57b, 157a, 157b and one principal surfaces of the first and second circulation belts 32, 132 provided with the recesses and projections 32a, 32b, 132a, 132b differ in orientation, and these principal surfaces are orientated perpendicular to each other to be at right angles to each other.

It should be noted that the one principal surfaces of the third and fourth auxiliary belts 57, 157 of the third and fourth pallet moving parts 51, 152 provided with the recesses and projections 57a, 57b, 157a, 157b are also oriented perpendicular to the one principal surfaces of the first and second auxiliary pulleys 47, 147 of the first and second pallet moving parts 41, 141 provided with the projections and recesses 14a, 14b, 147a, 147b. Thus, although not shown, the first and second pallet moving parts 41, 141 and the third and fourth pallet moving parts 51, 151 can be arranged adjacent to each other.

Further, principal surfaces of fifth and sixth auxiliary belts 67, 167 of the later-described fifth pallet moving parts 61, 161 provided with recesses and projections 67a, 67b, 167a, 167b are substantially on the same planes as the one principal surfaces of the third and fourth auxiliary belts 57, 157 of the third and fourth pallet moving parts 51, 151 provided with the recesses and projections 57a, 57b, 157a, 157b.

In this way, a plurality of sets of the first and second pallet moving parts 41, 141, the third and fourth pallet moving parts 51, 151, the fifth and sixth pallet moving parts 61, 161 and the first to fourth guide rails 21, 22, 121 and 122 can be arranged adjacent to each other if necessary. Thus, various pallet conveying apparatuses and conveyance modes can be constructed according to the number of machine tools, a work processing process, a processing sequence, a pallet return timing or the like.

Here, with the work conveying pallet 11 located on a boundary between the first to fourth guide rail 21, 22, 121, 122 and the third or fourth short rail 52, 152 as shown as an example in an upper part of FIG. 10, the first or second circulation belt 32, 132 is locked to the first locking members 14 provided on the lower side of the work conveying pallet 11 and the second locking members 14 provided on the side surface (side edge) of the pedestal 13 of the work conveying pallet 11 are locked to the third or fourth auxiliary belt 57, 157.

Accordingly, if the first and second circulation belts 32, 132 and the third and fourth auxiliary belts 57, 157 are circulated at the same speed, the work conveying pallets 11 moving on the first to fourth guide rails 21, 22, 121, 122 move to the third and fourth short rails 52, 152 connected to the first to fourth guide rails 21, 22, 121, 122. Further, if the first and second circulation belts 32, 132 and the third and fourth auxiliary belts 57, 157 are circulated at the same speed in opposite directions, the work conveying pallets 11 moving on the third and fourth short rails 52, 152 move from the third and fourth short rails 52, 152 to the first to fourth guide rails 21, 22, 121, 122.

The fifth and sixth pallet moving parts 61, 161 provided via the third and fourth pallet moving parts 51, 151 at the other end parts of the first to fourth guide rail 21, 22, 121 and 122 horizontally move the work conveying pallet 11 between the first and third guide rails 21, 121 provided at a predetermined interval in the Y-axis direction. Further, the fifth and sixth pallet moving parts 61, 161 similarly horizontally move the work conveying pallet 11 between the second and fourth guide rails 22, 122 provided at a predetermined interval in the Y-axis direction.

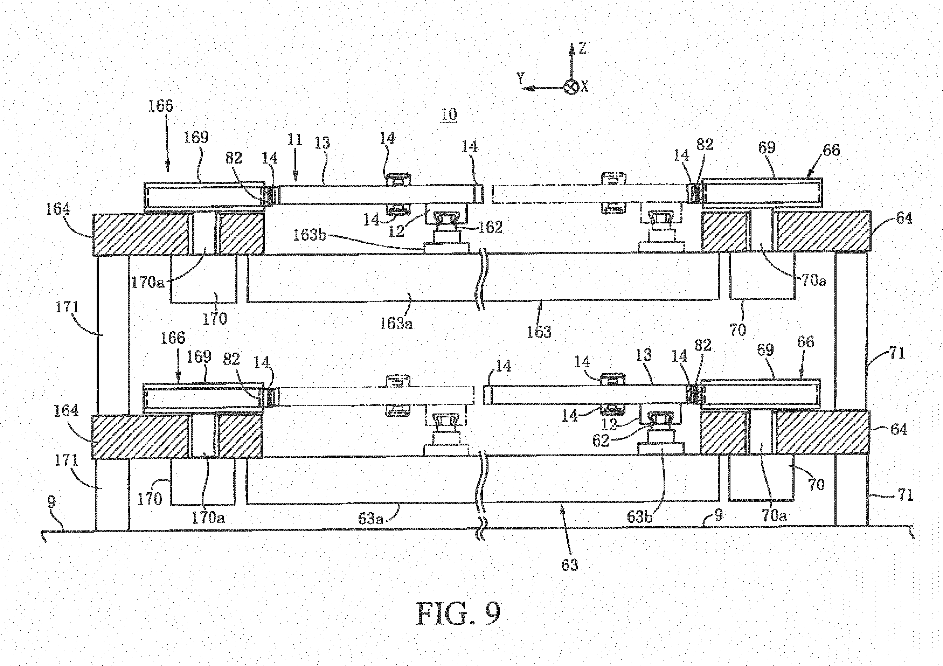

As shown in FIG. 9, the fifth and sixth pallet moving parts 61, 161 in the present embodiment include fifth and sixth short rails 62, 162 configured such that the work conveying pallet 11 is mountable thereon, fifth and sixth rail moving mechanisms 63, 163 for parallelly moving the fifth and sixth short rails 62, 162 from a fifth position on one side to a six position on the other side, and fifth and sixth pallet locking mechanisms 66, 166 for limiting movements of the work conveying pallets 11 mounted on the fifth and sixth short rails 62, 162. The fifth position is a position connected to the linear motion guide rail 21c, 22c of the first or second guide rail 21, 22. Further, the sixth position is a position connected to the linear motion guide rail 121c, 122c of the third or fourth guide rail 121, 122. The fifth and sixth short rails 62, 162 have the same structure as the first to fourth short rails 42, 52, 142 and 152 of the first to fourth pallet moving parts 41, 51, 141 and 151.

The fifth and sixth pallet locking mechanisms 66, 166 have the same structure as the third and fourth pallet locking mechanisms 56, 156 and include endless fifth and sixth auxiliary belts 67, 167 provided on the fifth and sixth supporting plates 64, 164 and configured to circulate, and fifth and sixth auxiliary circulating mechanisms for circulating these fifth and sixth auxiliary belts 67, 167.

In the present embodiment, four fifth and sixth supporting plates 64, 164 are mounted on the mount 9 via supporting columns 71, 171. Out of those, two fifth supporting plates 64 are mounted via the supporting column 71 at positions where the sixth auxiliary belt 67 is locked to the second locking members 14 provided on the side edge of the work conveying pallet 11 when the work conveying pallet 11 moves to an extension of the first or second guide rail 21, 22 located on the one side.

Further, the other two sixth supporting plates 164 are mounted via the supporting column 171 at positions where the sixth auxiliary belt 167 is locked to the second locking members 14 provided on the other side edge of the work conveying pallet 11 when the work conveying pallet 11 moves to an extension of the third or fourth guide rail 121, 122.

As shown in FIGS. 9 and 10, auxiliary pulleys 68, 168 on which the fifth and sixth auxiliary belts 67, 167 are respectively mounted are rotatably supported on one end part of each of the four fifth and sixth supporting plates 64, 164 in the X-axis direction, and auxiliary drive pulleys 69, 169 on which the fifth and sixth auxiliary belts 67, 167 are respectively mounted are rotatably supported on the other end parts of the fifth and sixth supporting plates 64, 164 in the X-axis direction.

The fifth and sixth auxiliary circulating mechanisms are servo motors 70, 170 respectively mounted on the fifth and sixth supporting plates 64, 164. The auxiliary drive pulleys 69, 169 are respectively mounted on rotary shaft 70a, 170a of the servo motors 70, 170.

The auxiliary drive pulleys 69, 169 are provided on the same planes as the auxiliary pulleys 68, 168 and the fifth and sixth auxiliary belts 67, 167 are respectively mounted on the auxiliary drive pulleys 69, 169 and the auxiliary pulleys 68, 168.

When the servo motors 70, 170 are driven by a command from the unillustrated controller, the fifth and sixth auxiliary belts 67, 167 are circulated via the auxiliary drive pulleys 69, 169 and the auxiliary pulleys 68, 168.

As shown in FIG. 10, the fifth and sixth supporting plates 64, 164 are mounted on the mount 9 via the supporting columns 71, 171 such that the fifth and sixth auxiliary belts 67, 167 are circulated along the fifth and sixth short rails 62, 162 when the fifth and sixth short rails 62, 162 are present on extensions of the linear motion guide rails 21c, 22c, 121c, 122c of the first to fourth guide rails 21, 22, 121, 122.

When the fifth and sixth short rails 62, 162 are connected to the linear motion guide rails 21c, 22c, 121c, 122c of the first to fourth guide rails 21, 22, 121, 122 via the third and fourth short rails 52, 152, the work conveying pallets 11 moving from the linear motion guide rails 21c, 22c, 121c, 122c via the third and fourth short rails 52, 152 are mounted on the fifth and sixth short rails 62, 162. Further, the fifth and sixth short rails 62, 162 are configured such that the work conveying pallets 11 mounted on the fifth and sixth short rails 62, 162 are movable to the linear motion guide rails 21, 22c, 121c, 122c via the third and fourth short rails 52, 152.

Further, the fifth and sixth auxiliary belt 67, 167 are belts in which recesses and projections 67a, 67b, 167a, 167b having the same shapes as in the first and second circulation belts 32, 132 and extending in the width direction are alternately connected in a longitudinal direction. The fifth and sixth auxiliary belts 67, 167 are configured such that the recesses and projections 67a, 67b, 167a, 167b are engageable with the projections and recesses 14a, 14b formed on the second locking members 14 provided on one or the other side edges of the work conveying pallets 11 when the work conveying pallets 11 are mounted on the fifth and sixth short rails 62, 162 connected to the linear motion guide rails 21c, 22c, 121c, 122c via the third and fourth short rails 52, 152.

Accordingly, when the first and second circulation belts 32, 132, the third and fourth auxiliary belts 57, 157 and the fifth and sixth auxiliary belts 67, 167 shown in FIG. 10 are circulated at the same speed, the work conveying pallets 11 moving on the first to fourth guide rails 21, 22, 121, 122 are movable up to the fifth and sixth short rails 62, 162 via the third and fourth short rails 52, 52 connected to the first to fourth guide rails 21, 22, 121, 122. Further, the work conveying pallets 11 mounted on the fifth and sixth short rails 62, 162 are moved from the fifth and sixth short rails 62, 162 to the first to fourth guide rails 21, 22, 121, 122 via the third and fourth short rails 52, 152.

As shown in FIG. 9, the fifth and sixth rail moving mechanisms 63, 163 for moving such fifth and sixth short rails 62, 162 in the horizontal direction are composed of fluid pressure cylinders 63, 163 disposed between the fifth and sixth supporting plates 64, 164 separated in the Y-axis direction. The fluid pressure cylinders 63, 163 respectively include body portions 63a, 163a actually disposed between the fifth and sixth supporting plates 64, 164 separated in the Y-axis direction and sliders 63b, 163b provided atop those body portions 63a, 163a and movable in the longitudinal direction by a fluid pressure.

In the present embodiment, the fifth and sixth short rails 62, 162 are provided on the sliders 63b, 163b. The sliders 63b, 163b are configured to move in the Y-axis direction together with the fifth and sixth short rails 62, 162 by an inflow pressure of fluid in response to a command from the unillustrated controller.

When the fifth and sixth short rails 62, 162 are connected to the first or second guide rail 21, 22, the projections and recesses 14a, 14b of the second locking members 14 provided on one side edges of the work conveying pallets 11 mounted on the fifth and sixth short rails 62, 162 are engaged with the recesses and projections 67a, 67b of the fifth auxiliary belts 67 of the fifth pallet moving part 61 on one side. In this way, the work conveying pallets 11 are locked to the fifth pallet moving part 61.

When the fifth and sixth short rails 62, 162 move toward positions connected to the third or fourth guide rails 121, 122 on the other side, the engaged projections and recesses 14a, 14b of the second locking members 14 of the work conveying pallets 11 are separated from the recesses and projections 67a, 67b of the fifth auxiliary belts 67 of the fifth pallet moving part 61 on the one side, whereby the locking thereof is released.

Thereafter, when the fifth and sixth short rails 62, 162 reach positions to be connected to the third or fourth guide rail 121, 122, the projections and recesses 14a, 14b of the second locking members 14 provided on the other side edges of the work conveying pallets 11 are engaged with the recesses and projections 167a, 167b of the sixth auxiliary belts 167 of the sixth pallet moving part 161 on the other side, whereby the work conveying pallets 11 are locked to the sixth pallet moving part 161.

In the pallet conveying apparatus 10 of the present embodiment, when the work conveying pallet 11 of the present embodiment is mounted on the first or third guide rail 21, 121 as shown in FIGS. 3 to 5, the projections and recesses 14a, 14b of the first locking members 14 provided on the lower side of the base 13 are respectively engaged with the recesses and projections 32a, 32b or 132a, 132b of the first or second circulation belt 32, 132 provided along the first or third guide rail 21, 121. Thus, by driving the servo motor 33, 133 serving as a drive mechanism to circulate the first or second circulation belt 32, 132, the work conveying pallet 11 of the present embodiment can be conveyed along the first or third guide rail 21, 121.

On the other hand, in the pallet conveying apparatus 10 of the present embodiment, when the work conveying pallet 11 of the present embodiment is mounted on the second or fourth guide rail 22, 122 as shown in enlarged views of FIGS. 4 and 5, the projections and recesses 14a, 14b of the first locking members 14 provided on the upper part of the work conveying pallet 11 are respectively engaged with the recesses and projections 32a, 32b or 132a, 132b of the first or second circulation belt 32, 132 provided along the second or fourth guide rail 22, 122. Thus, by driving the servo motor 33, 133 serving as a drive mechanism to circulate the first or second circulation belt 32, 132, the work conveying pallet 11 of the present embodiment can be conveyed in an opposite direction along the second or fourth guide rail 22, 122.

Thus, in the present embodiment, the pallet conveying apparatus 10 can be provided which can convey the work conveying pallet 11 in the one direction by locking the upper first locking members 14 to the first or second circulation belt 32, 132 and can convey the work conveying pallet 11 in the other direction (opposite direction in the present embodiment) by locking the lower first locking members 14 to the first or second circulation belt 32, 132. In this way, it is possible to increase a degree of freedom in designing the pallet conveying apparatus 10 for conveying the work conveying pallet 11 of the present embodiment.

Particularly, in the pallet conveying apparatus 10 described above, the work conveying pallets 11 of the present embodiment respectively mounted on the first or third guide rail 21, 121 or the second or fourth guide rail 22, 122 are locked to the single first or second circulation belt 32, 132. By circulating the first or second circulation belt 32, 132, the work conveying pallets 11 of the present embodiment respectively mounted on the first or third guide rail 21, 121 or the second or fourth guide rail 22, 122 can be simultaneously moved in different directions. Thus, a separate circulation belt for returning the work conveying pallets 11 toward a side where the work conveying pallets 11 were mounted is unnecessary and the number of components of the pallet conveying apparatus 10 can be reduced, whereby it can be prevented that the manufacturing cost (unit price) of the pallet conveying apparatus 10 is pushed up.

On the other hand, the work conveying pallet 11 of the present embodiment is moved between the first to fourth guide rails 21, 22, 121 and 122 by first to sixth pallet moving parts 41, 51, 61, 141, 151 and 161.

Specifically, the work conveying pallet 11 of the present embodiment is moved together with first to sixth short rails 42, 52, 62, 142, 152, 162 by first to sixth rail moving mechanism 43, 53, 63, 143, 153, 163 in a state where the work conveying pallet 11 of the present embodiment is mounted on the first to sixth short rails 42, 52, 62, 142, 152, 162 provided in the first to sixth pallet moving part 41, 51, 61, 141, 151 and 161.

First to sixth auxiliary belts 47, 57, 67, 147, 157 and 167 are utilized in mounting the work conveying pallet 11 of the present embodiment on the first to sixth short rails 42, 52, 62, 142, 152 and 162 and moving the work conveying pallet 11 from the first to sixth short rails 42, 52, 62, 142, 152, 162 to the first to fourth guide rails 21, 22, 121 and 122.

Here, in the work conveying pallet 11 of the present embodiment, the second locking members 14 are provided also on at least one of the plurality of side surfaces of the base 13. Since the first to sixth auxiliary belts 47, 57, 67, 147, 157 and 167 are also provided with recesses and projections to which the first or second locking members 14 of the work conveying pallet 11 are lockable, it is possible to increase a degree of freedom in disposing the first to sixth auxiliary belts 47, 57, 67, 147, 157 and 167.

As just described, the degree of freedom in designing the pallet conveying apparatus 10 for conveying the work conveying pallet 11 of the present embodiment can be reliably increased as compared to conventional work conveying pallets and work conveying apparatuses provided with a locking member only on one arbitrary surface of a base.

### (Second Embodiment)

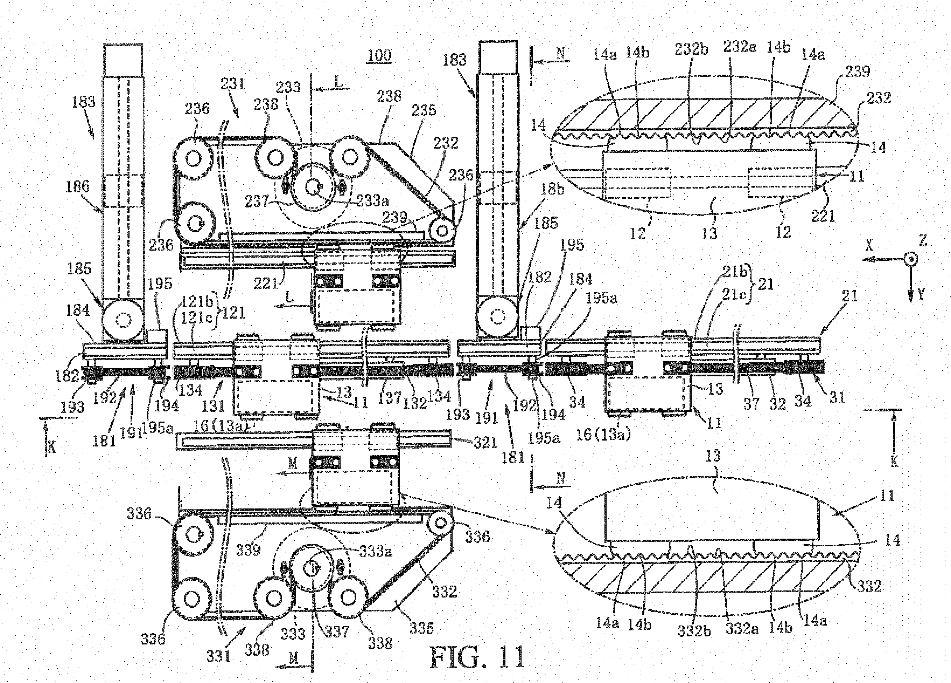

A pallet conveying apparatus in a second embodiment of the present invention is described with reference to FIGS. 11 to 15. FIGS. 11 to 15 show a pallet conveying apparatus 100 for conveying a work conveying pallet 11 in the second embodiment of the present invention.

In each figure, three axes of X, Y and Z orthogonal to each other are set, wherein it is assumed that an X axis extends substantially in a horizontal lateral direction, a Y axis extends substantially in a horizontal front-back direction and a Z axis extends in a vertical direction. The configuration of this pallet conveying apparatus 100 is described below using X, Y and Z directions. It should be noted that the configuration of the work conveying pallet 11 in the present embodiment is not described to avoid repeated description since being similar to that in the first embodiment.

The pallet conveying apparatus 100 in the second embodiment is provided with six guide rails on which the work conveying pallet 11 of the present invention is movably mounted. Out of these six guide rails, four guide rails 21, 22, 121 and 122 are similar to those of the pallet conveying apparatus 10 in the first embodiment except that the first and third guide rails 21, 121 and the second and fourth guide rails 22, 122 extend straight in an X-axis direction and are arranged to be continuous. Thus, the first to fourth guide rails 21, 22, 121 and 122 are not described to avoid repeated description.

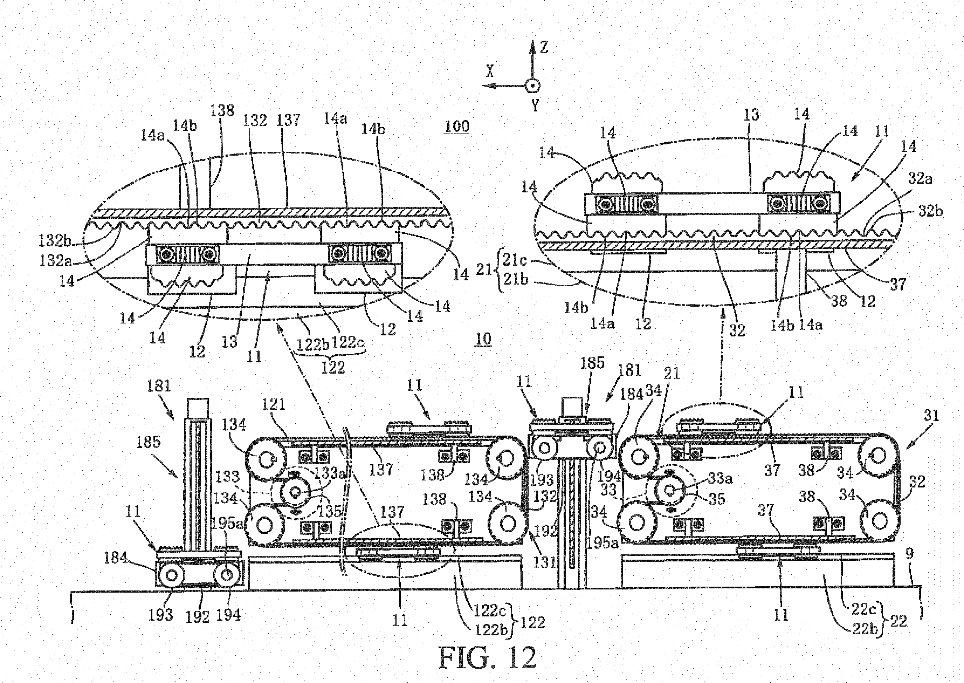

Further, as shown in FIG. 12, the pallet conveying apparatus 100 of the present embodiment includes a first pallet feeding part 31 for conveying the work conveying pallets 11 mounted on the first and second guide rails 21, 22 along the first and second guide rails 21, 22 and a second pallet feeding part 131 for conveying the work conveying pallets 11 mounted on the third and fourth guide rails 121, 122 along the third and fourth guide rails 121, 122. These first and second pallet feeding parts 31, 131 are also similar to those of the pallet conveying apparatus 10 in the first embodiment. Thus, the first and second pallet feeding parts 31, 131 are also not described to avoid repeated description.

As shown in FIG. 11, fifth and sixth guide rails 221, 321, which are the remaining two out of the six guide rails, are provided to extend in the X-axis direction at a predetermined interval in a Y-axis direction from the third guide rail 121 such that the three guide rails 121, 221 and 321 are parallel to each other.

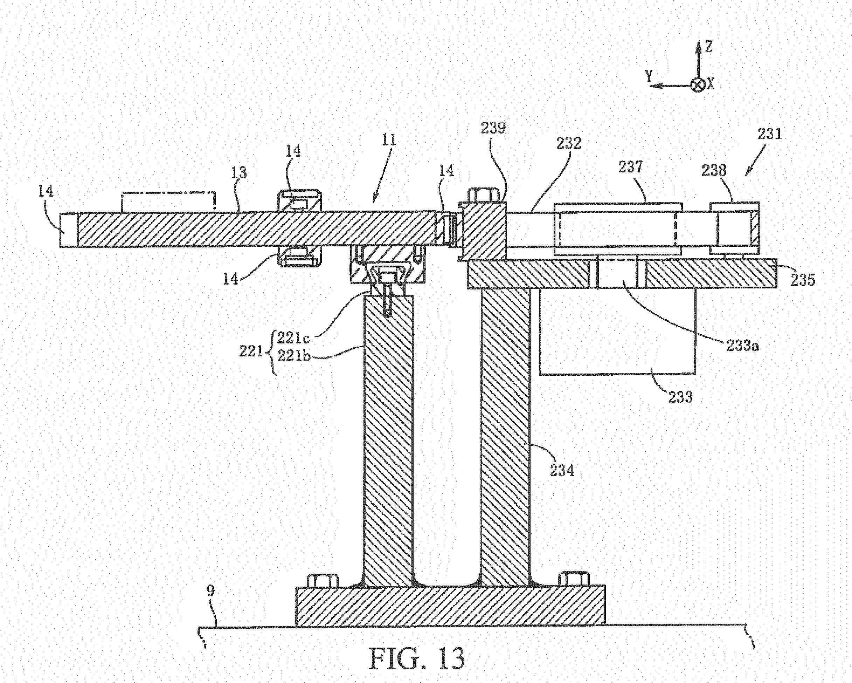

As shown in FIG. 13, the fifth guide rail 221 includes a fifth supporting plate 221 b directly fixed onto a mount 9 and a commercially available fifth linear motion guide rail 221c fixed to the upper edge of the fifth supporting plate 221b by screwing.

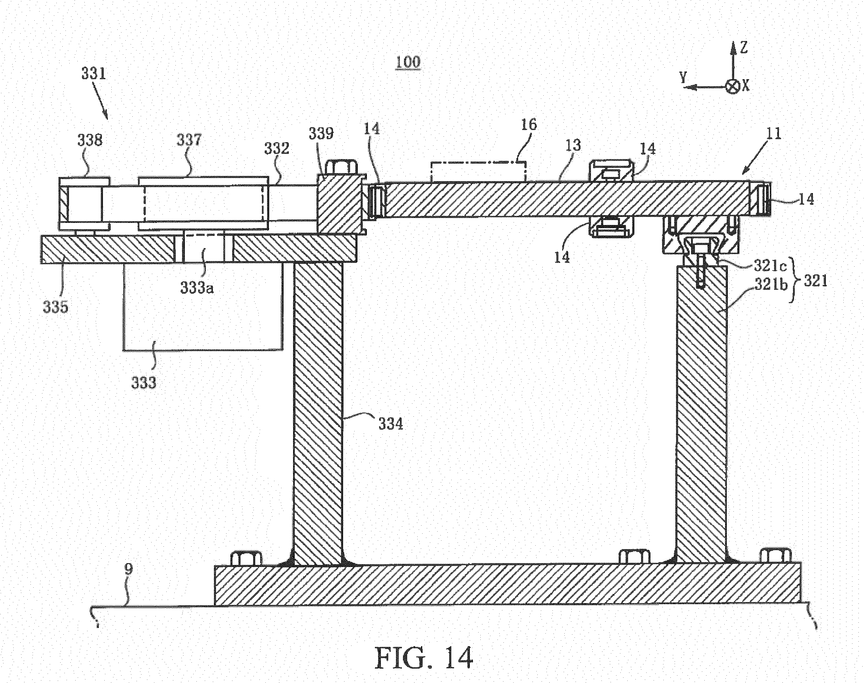

Further, as shown in FIG. 14, the sixth guide rail 321 includes a sixth supporting plate 321b directly fixed onto the mount 9 and a commercially available sixth linear motion guide rail 321c fixed to the upper edge of the sixth supporting plate 321b by screwing.

Here, first to sixth linear motion guide rails 21c, 22c, 121c, 122c, 221c, 321c of the first to sixth guide rails 21, 22, 121, 122, 221 and 321 are identical. It is assumed that, even if the work conveying pallet 11 mounted on any one of the guide rails is moved to and mounted on another guide rail, that work conveying pallet 11 is configured to be movable along this other guide rail 21, 22, 121, 122, 221, 321.

As shown in FIGS. 11 and 12, seventh pallet moving parts 181 are respectively provided at one end parts (i.e. sides where the third and fourth guide rails 121, 122 are not facing the first and second guide rails 21, 22) of the third and fourth guide rails 121, 122 and between the third and fourth guide rails 121, 122 and the first and second guide rails 21, 22.

The seventh pallet moving part 181 is for moving the work conveying pallet 11 mounted on any one of the first to sixth guide rails 21, 22, 121, 122, 221 and 321 to another guide rail 21, 22, 121, 122, 221, 321.

It should be noted that since these seventh pallet moving parts 181 have the same structure, one of them is described as a representative below.

As shown in FIGS. 11, 12 and 15, the seventh pallet moving part 181 in the present embodiment includes a seventh short rail 182 configured such that the work conveying pallet 11 is mountable thereon, and a seventh rail moving mechanism 183 for moving the seventh short rail 182 to a position connected to the first to sixth linear motion guide rail 21c, 22c, 121c, 122c, 221c, 321c of the first to sixth guide rail 21, 22, 121, 122, 221, 321.

The same rails as the first to sixth linear motion guide rails 21c, 22c, 121c, 122c, 221c and 321c of the first to sixth guide rails 21, 22, 121, 122, 221 and 321 are used as the seventh short rails 182.

The first and second guide rails 21, 22 and the third and fourth guide rails 121, 122 are provided to be continuous in a longitudinal direction extending in an X-axis direction while being spaced apart by a distance slightly longer than a length of the seventh short rails 182.

When the seventh short rail 182 is connected to the first or second linear motion guide rail 21c, 22c of the first or second guide rail 21, 22 by the seventh pallet moving part 181, that seventh short rail 182 is arranged to be continuous to the third or fourth linear motion guide rail 121c, 122c of the third or fourth guide rail 121, 122.

The pallet conveying apparatus 100 of the present embodiment is configured such that, in a state where the seventh short rails 182 are continuous, the work conveying pallet 11 can be moved from the first to sixth linear motion guide rail 21c, 22c, 121c, 122c, 221c, 321c and mounted on the seventh short rail 182 and the work conveying pallet 11 mounted on the seventh short rail 182 can be moved to the first to sixth linear motion guide rail 21c, 22c, 121c, 122c, 221c, 321c.

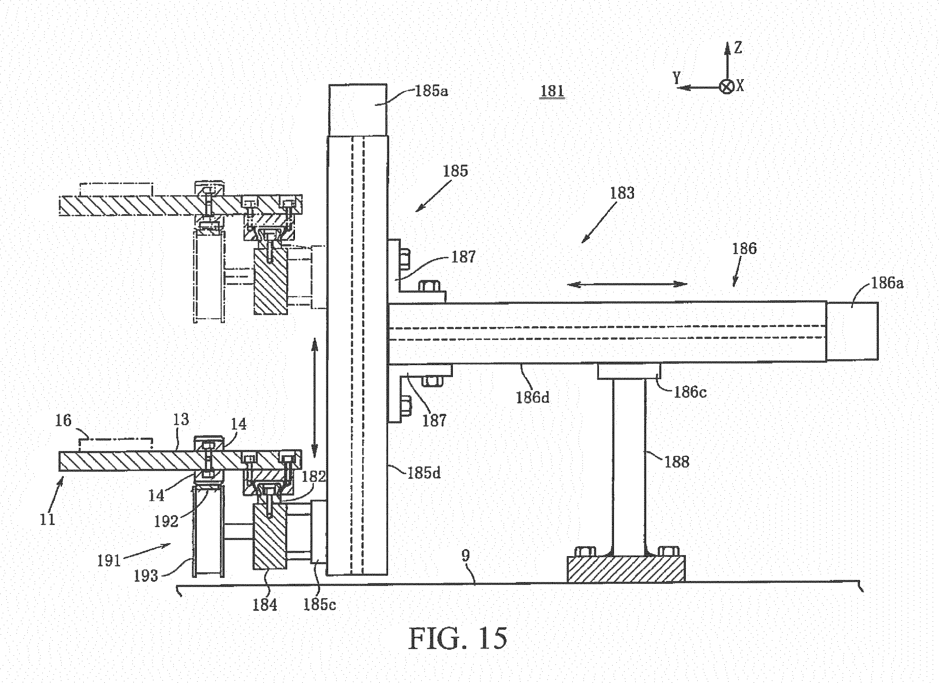

As shown in FIG. 15, the seventh rail moving mechanism 183 for moving such a seventh short rail 182 includes a seventh supporting plate 184 having the seventh short rail 182 mounted on an upper edge, a seventh Z-axis direction telescopic actuator 185 for moving the seventh supporting plate 184 in the Y-axis direction with respect to the mount 9 and a Y-axis direction telescopic actuator 186 for moving the seventh Z-axis direction telescopic actuator 185 with respect to the mount 9.

In the present embodiment, the seventh supporting plate 184 having the seventh short rail 182 provided thereon is mounted on a follower 185c of the seventh Z-axis direction telescopic actuator 185 movably in the Z-axis direction. Further, to make the seventh supporting plate 184 movable in the Y-axis direction together with the seventh Z-axis direction telescopic actuator 185, a housing 186d of the Y-axis direction telescopic actuator 186 is mounted on a housing 185d of the seventh Z-axis direction telescopic actuator 185 via brackets 187. A follower 186c of the Y-axis direction telescopic actuator 186 is fixed to the mount 9 via a support column 188.

Each of servo motors 185a, 186a of the seventh Z-axis direction and Y-axis direction telescopic actuators 185, 186 is connected to an unillustrated controller, and the operation thereof is controlled by the controller. As just described, the seventh rail moving mechanism 183 is configured to make the seventh short rail 182 movable in a predetermined YZ plane.

Accordingly, when the seventh short rail 182 of the seventh pallet moving part 181 is connected to the first to sixth guide rail 21, 22, 121, 122, 221, 321, the work conveying pallet 11 moving on any one of the first to sixth guide rails 21, 22, 121, 122, 221 and 321 is moved from that guide rail to the seventh short rail 182. Further, the seventh pallet moving part 181 includes a pallet locking mechanism 191 for limiting a movement of the work conveying pallet 11 mounted on this seventh short rail 182.

This pallet locking mechanism 191 is configured to be engageable with the work conveying pallet 11 mounted on the seventh short rail 182 and includes an endless seventh auxiliary belt 192 provided along the seventh short rail 182 to circulate and a seventh auxiliary circulation mechanism for circulating the seventh auxiliary belt 192.

An auxiliary pulley 193 around which the seventh auxiliary belt 192 extending along the seventh short rail 182 is mounted is rotatably supported on one end part of the seventh supporting plate 184 in the X-axis direction. Further, an auxiliary drive pulley 194 around which the seventh auxiliary belt 192 extending along the seventh short rail 182 is mounted is rotatably supported on the other end part of the seventh supporting plate 184 in the X-axis direction. The seventh circulation mechanism is composed of a servo motor 195 mounted on the seventh supporting plate 184. The auxiliary drive pulley 194 is mounted on a rotary shaft 195a of the servo motor 195. The auxiliary drive pulley 194 is provided on the same plane (not shown) as the auxiliary pulley 193 and the seventh auxiliary belt 192 is mounted around the auxiliary drive pulley 194 and the auxiliary pulley 193.

When the servo motor 195 is driven by a command from the unillustrated controller, the seventh auxiliary belt 192 is circulated along the seventh short rail 182 via the auxiliary drive pulley 194 and the auxiliary pulley 193.

The seventh auxiliary belt 192 is a belt in which recesses and projections having the same shapes as those of first and second circulation belts 32, 132 and extending in a width direction are alternately connected one after another in a longitudinal direction. The recesses and projections of the seventh auxiliary belt 192 are configured to be engageable with projections and recesses 14a, 14b formed on the work conveying pallet 11. Thus, when the first or second circulation belt 32, 132 and the seventh auxiliary belt 192 are circulated at the same speed, the work conveying pallet 11 moving on the first to fourth guide rail 21, 22, 121, 122 is moved to the seventh short rail 182 connected to the first to fourth guide rail 21, 22, 121, 122.

As shown in FIG. 11, the pallet conveying apparatus 100 includes third and fourth pallet feeding parts 231, 331 for conveying the work conveying pallets 11 mounted on the fifth and sixth guide rails 221, 321 along the fifth and sixth guide rails 221, 321. The third and fourth pallet feeding parts 231, 331 include endless third and fourth circulation belts 232, 332 configured to be engageable with the work conveying pallet 11 and provided along the fifth and sixth guide rails 221, 321, and third and fourth circulation mechanisms 233, 333 for circulating the third and fourth circulation belts 232, 332.

As shown in FIGS. 13 and 14, fifth and sixth supporting members 234, 334 respectively stand near the fifth and sixth guide rails 221, 321 on the mount 9. Horizontal plates 235, 335 are respectively mounted on the upper ends of the fifth and sixth supporting members 234, 334. The horizontal plates 235, 335 are provided substantially at the same height as the linear motion guide rails 221c, 321c of the fifth and sixth guide rails 221, 321, whereby the second locking members 14 of the work conveying pallet 11 are engaged with the third and fourth circulation belts 232, 332 when the work conveying pallet 11 moves on the fifth and sixth guide rails 221, 321.

As shown in FIG. 11, three driven pulleys 236, 336 are provided on the periphery of each of the horizontal plates 235, 335, and the third and fourth circulation belts 232, 332 are wound to enclose these three driven pulleys 236, 336.

Further, servo motors 233, 333 serving as circulation mechanisms for circulating the third and fourth circulation belts 232, 332 are provided on the horizontal plates 235, 335, and drive pulleys 237, 337 are mounted on rotary shaft 233a, 333a of the servo motors 233, 333. A drive pulley 237, 337 is provided on the same plane as the three driven pulleys 236, 336. A pair of turning pulleys 238, 338 for turning the third and circulation belts 232, 332 are rotatably supported on the horizontal plate 235, 335 near the drive pulley 237, 337 such that the third and fourth circulation belts 232, 332 are mounted around the drive pulleys 237, 337.

When the servo motors 233, 333 are driven by a command from an unillustrated controller, the rotary shafts 233a, 333a rotate together with the drive pulleys 235, 335. The third or fourth circulation belt 232, 332 mounted on the drive pulleys 237, 337 circulates while enclosing the three driven pulleys 236, 336.

As shown in an enlarged view of FIG. 11, the third and fourth circulation belts 232, 332 are belts in which recesses and projections 232a, 232b, 332a, 332b extending in the width direction as in the circulation belts 32, 132 are alternately connected one after another in a longitudinal direction. The projections and recesses 14a, 14b engageable with those recesses and projections 232a, 232b, 332a, 332b are formed on the second locking members 14 of the work conveying pallet 11. The second locking members 14 are provided on both sides of the base 13, and the second locking members 14 on the both sides provided to face the horizontal plates 235, 335 are respectively engaged with the third and fourth circulation belts 232, 332.

When the third and fourth circulation belts 232, 332 come into contact with the second locking members 14, the recesses and projections 232a, 232b, 332a, 332b formed on the third and fourth circulation belts 232, 332 are engaged with the projections and recesses 14a, 14b of the second locking members 14. Further, when the third and fourth circulation belts 232, 332 are lifted and separated from the second locking members 14, the recesses and projections 232a, 232b, 332a, 332b of the third and fourth circulation belts 232, 332 and the projections and recesses 14a, 14b of the second locking members 14 are disengaged. The pallet conveying apparatus 100 of the present embodiment is configured as just described.

Here, as shown in FIGS. 13 and 14, third and fourth supporting members 239, 339 for preventing the slack of the third and fourth circulation belts 232, 332 between the driven pulleys 236, 336 and preventing the third and fourth circulation belts 232, 332 from being separated from the second locking members 14 are mounted on the horizontal plates 235, 335.

When the projections and recesses 14a, 14b of the second locking members 14 are engaged with the recesses and projections 232a, 232b, 332a, 332b of the third or fourth circulation belt 232, 332 as shown in an enlarged view of FIG. 11, a movement of the work conveying pallet 11 in the X-axis direction independent of the rotation of the third or fourth circulation belt 232, 332 is prohibited. Thus, when the third or fourth circulation belt 232, 332 having the work conveying pallet 11 engaged therewith is circulated, the work conveying pallet 11 moves together with the third or fourth circulation belt 232, 332. In this way, the work conveying pallet 11 is conveyed along the fifth or sixth guide rail 221, 321 adjacent to the third or fourth circulation belt 232, 332.

In the pallet conveying apparatus 100 of the present embodiment configured as described above, as in the first embodiment, when the work conveying pallet 11 of the present invention is mounted on the first or third guide rail 21, 121 as shown in FIGS. 11 and 12, the projections and recesses 14a, 14b of the first locking members 14 provided on the lower side of the base 13 are engaged with the recesses and projections 32a, 32b or 132a, 132b of the first or second circulation belt 32, 132 provided along the first or third guide rail 21, 121. Thus, by driving the servo motor 33, 133 serving as a drive mechanism to circulate the first or second circulation belt 32, 132, the work conveying pallet 11 of the present embodiment can be conveyed along the first or third guide rail 21, 121.

On the other hand, when the work conveying pallet 11 of the present embodiment is mounted on the second or fourth guide rail 22, 122, the locking members 14 provided on the upper part of the work conveying pallet 11 are engaged with the first or second circulation belt 32, 132 provided along the second or fourth guide rail 22, 122. Thus, by driving the servo motor 33, 133 serving as the drive mechanism to circulate the first or second circulation belt 32, 132, the work conveying pallet 11 of the present embodiment can be conveyed in an opposite direction along the second or fourth guide rail 22, 122.

Further, when the work conveying pallet 11 of the present embodiment is mounted on the fifth or sixth guide rail 221, 321, the locking members 14 provided on the side edge of the base 13 are engaged with the third or fourth circulation belt 232, 332 provided along the fifth or sixth guide rail 221, 321. Thus, by driving the servo motor 233, 333 serving as a drive mechanism to circulate the third or fourth circulation belt 232, 332, the work conveying pallet 11 of the present embodiment can be conveyed along the fifth or sixth guide rail 221, 321.

Accordingly, with the work conveying pallet 11 of the present embodiment, it is possible to provide the pallet conveying apparatus 100 capable of conveying the work conveying pallet 11 in one direction or the opposite direction by locking the second locking members 14 to the third or fourth circulation belt 232, 332 of the pallet conveying apparatus 100 besides in the case of the pallet conveying apparatus 10 of the first embodiment. In this way, it is possible to increase a degree of freedom in designing the pallet conveying apparatus 100 for conveying the work conveying pallet 11 of the present embodiment.

Here, the work conveying pallet 11 of the present embodiment is moved between the first to sixth guide rails 21, 22, 121, 122, 221 and 321 by two seventh pallet moving parts 181. The seventh rail moving mechanism 183 moves the work conveying pallet 11 by moving the seventh short rail 182 together with the work conveying pallet 1 1 of the present embodiment after the work conveying pallet 11 of the present embodiment is mounted on the seventh short rail 182 of the seventh pallet moving part 181.

It should be noted that a case where the work conveying pallet 11 is configured such that the mounting tool 16 for mounting the work is provided on one side part of the base 13 and the linear motion blocks 12 are provided on the other side part of the base 13 has been described in the above first and second embodiments. However, this mounting tool 16 may be provided in a center on the upper side of the base 13 and the linear motion blocks 12 may be provided in a center on the lower side of the base 13.

Further, a case where the mounting tool 16 is provided on the base 13 in the form of a flat plate has been described in the above first and second embodiments. However, the mounting tool 16 may be provided in a through hole formed in the base 13. If such a mounting tool 16 is provided, the work can be mounted through the base 13 via the through hole and both upper and lower surfaces of the work can be processed.

Furthermore, a case where the work conveying pallet 11 of the present embodiment is moved between the first to sixth guide rails 21, 22, 121, 122, 221, 321 by moving the first to seventh short rail in the Y-axis direction or Z-axis direction while a locked state of the first or second locking members 14 to the first to seventh auxiliary belt 47, 57, 147, 157, 67, 167, 192 is maintained after the work conveying pallet 11 of the present embodiment is mounted on the first to seventh short rail 42, 52, 62, 142, 152, 162, 182 by circulating the first to seventh auxiliary belt 47, 57, 147, 157, 67, 167, 192 has been described in the above first and second embodiments.

However, the locked state of the first or second locking members 14 to the first to seventh auxiliary belt 47, 57, 147, 157, 67, 167, 197 may not be maintained in moving the first to seventh short rails 42, 52, 62, 142, 152, 162, 182.

### (Modifications)

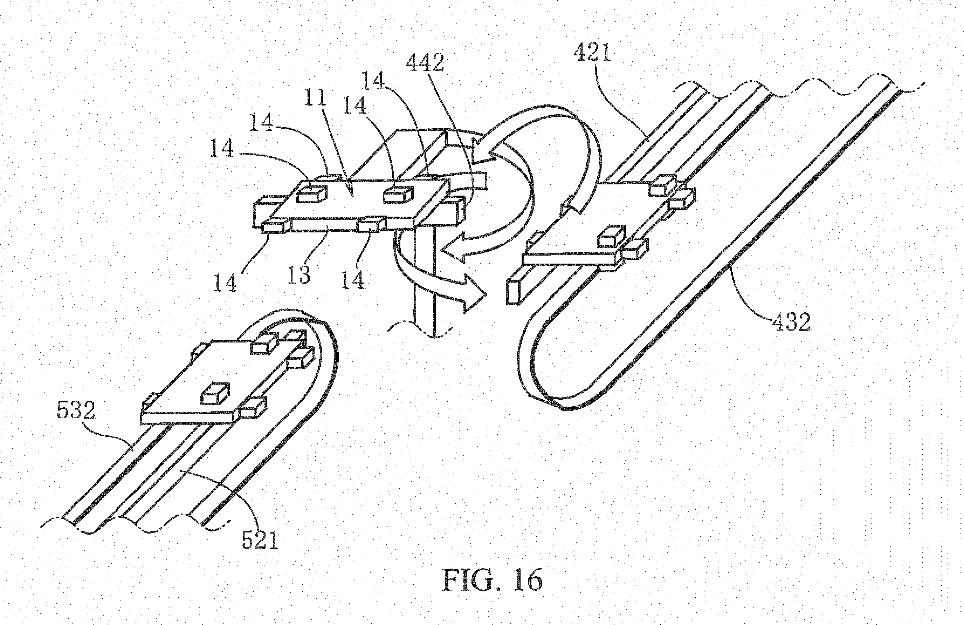

Hereinafter, modifications of the guide rails and pallet moving parts of the pallet conveying apparatus of the present invention are described with reference to FIGS. 16 to 19.

A case where the work conveying pallet 11 mounted on a guide rail 421 is conveyed with a circulation belt 432 of the pallet conveying apparatus locked to the first locking members 14 on the lower surface of the work conveying pallet 11, for example, as shown in FIG. 16 is described as one modification of the present invention. In this case, after the work conveying pallet 11 is moved from the guide rail 421 to a short rail 442, the short rail 442 is elevated in a state carrying the work conveying pallet 11 and the work conveying pallet 11 and the circulation belt 432 are first disengaged. Then, the short rail 442 carrying the work conveying pallet 11 is rotated by 180° in a horizontal plane and lowered again. After being rotated by 180° again, that work conveying pallet 11 may be moved from the short rail 442 to another guide rail 521. It should be noted that when that work conveying pallet 11 is moved to the other guide rail 521, a new circulation belt 532 is engaged with the first locking members 14 of the work conveying pallet 11, whereby the work conveying pallet 11 can be moved by the circulation of that circulation belt 532.

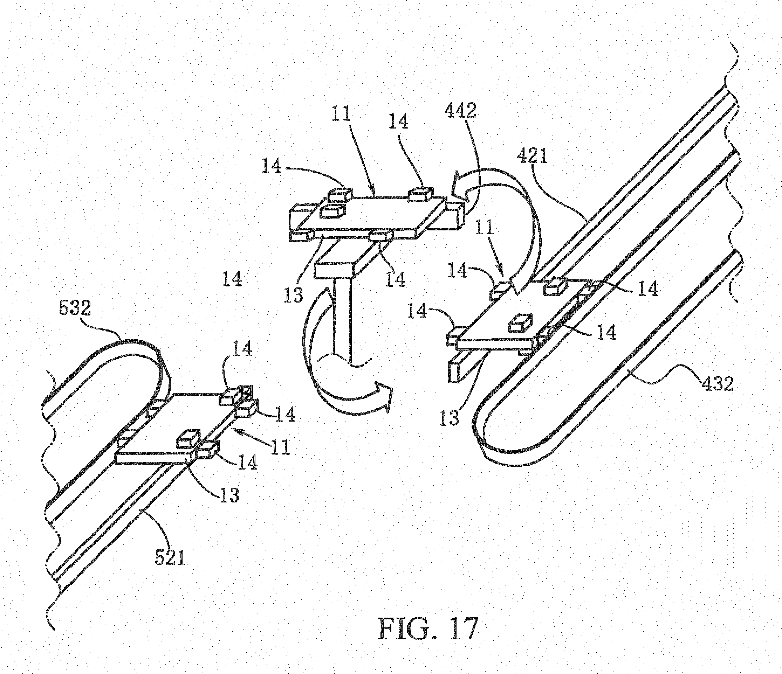

Further, a case where the work conveying pallet 11 mounted on the guide rail 421 is conveyed with the circulation belt 432 of the pallet conveying apparatus locked to the second locking members 14 on the side surface of the work conveying pallet 11 as shown in FIG. 17 is described. In this case, after the work conveying pallet 11 is moved from the guide rail 421 to the short rail 442, the short rail 442 carrying the work conveying pallet 11 is elevated or lowered, whereby the work conveying pallet 11 and the circulation belt 432 are first disengaged. Then, after the short rail 442 carrying the work conveying pallet 11 is rotated by 180° in a horizontal plane and, thereafter, lowered or elevated again. After being rotated by 180° again, that work conveying pallet 11 may be moved from the short rail 442 to the other guide rail 521. It should be noted that when that work conveying pallet 11 is moved to the other guide rail 521, the new circulation belt 532 is locked to the first locking members 14 of the work conveying pallet 11, whereby the work conveying pallet 11 can be moved by the circulation of that circulation belt 532.

As just described, in the pallet moving part, the engagement (locking) of the first or second locking members 14 and the circulation belt 432 may be first released during the movement of the work conveying pallet 11. By employing such a configuration, it is also possible to easily change the direction of the work conveying pallet 11 during the movement on the guide rail.

Further, a case where the work conveying pallet 11 is moved between the first to sixth guide rails 21, 22, 121, 122, 221 and 321 by moving the first to seventh short rails 42, 52, 62, 142, 152, 162, 182 carrying the work conveying pallet 11 in the Y-axis direction or Z-axis direction has been described in the above first and second embodiments.

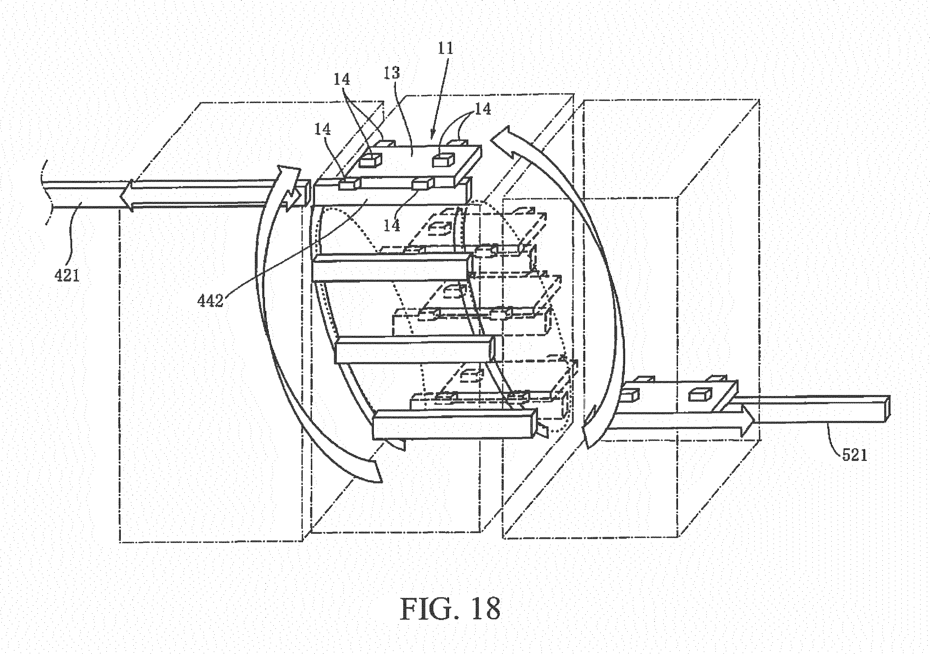

However, the pallet conveying apparatus may be configured such that the short rail 442 is obliquely moved as shown in FIG. 18. Specifically, the pallet conveying apparatus may be configured such that the short rail 442 is connected to the other guide rail 521 by moving the short rail 442 moved from the guide rail 421 and carrying the work conveying pallet 11 in an oblique direction and, thereafter, the work conveying pallet 11 is moved from the short rail 442 to the other guide rail 521.

Even if the short rail 442 is moved in the oblique direction in this way, the engagement (locking) of any one of the first and second locking members 14 by the pallet conveying apparatus can be released by starting the movement in the oblique direction since the work conveying pallet 11 is provided with the first and second locking members 14 on the front and back principal surfaces and the plurality of side surfaces of the base 13. Then, in a state where the short rail 442 is connected to the other guide rail 521, this locking member or any one of the other first and second locking members 14 can be locked to another circulation belt or the like of the pallet conveying apparatus.

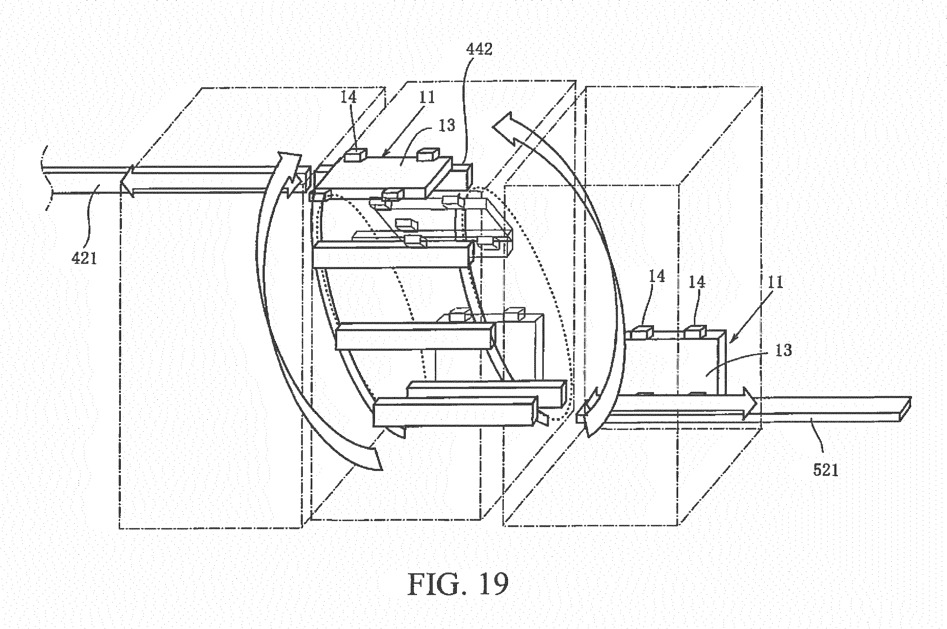

Further, the pallet conveying apparatus may be configured such that the short rail 442 is rotated around an axial center when being obliquely moved as shown in FIG. 19. When the short rail 442 carrying the work conveying pallet 11 is rotated around the axial center thereof, the base 13 of the work conveying pallet 11 can be inclined from a horizontal state. For example, if the short rail 442 is rotated by 90° from a lowermost part to an uppermost part as shown in FIG. 19, the base 13, which was vertical, can be horizontally located. Further, by inclining the base 13 in the horizontal state, the work conveying pallet 11 can be moved to the other guide rail 521 with the base 13 held in a vertical state.

Even in this case, since the work conveying pallet 11 is provided with the first and second locking members 14 on the front and back principal surfaces and the plurality of side surfaces of the base 13, the engagement (locking) of any one of the first and second locking members 14 by the pallet conveying apparatus can be released by starting the movement in the oblique direction. Then, in a state where the short rail 442 is connected to the other guide rail 521, this locking member or any one of the other first and second locking members 14 can be locked to another circulation belt or the like of the pallet conveying apparatus. As just described, also in the modifications of the present invention, a degree of freedom in designing the pallet conveying apparatus for conveying the work conveying pallet 11 can be increased by easily changing a conveyance path.

It should be noted that the movement of the work conveying pallet 11 between the guide rails can be also realized, using a robot arm or the like instead of the pallet moving parts shown in FIGS. 16 to 19.

As described above, the characteristic configuration of the present invention is that the first and second locking members 14 are provided on at least two surfaces out of the front and back principal surfaces and the plurality of side surfaces of the base 13. Specific examples of this configuration include (a) case where the locking members are provided on the front and back surfaces of the base, (b) case where the locking members are provided on the back surface and the side surface, (c) case where the locking members are provided on the front surface and the side surface of the base and (d) case where the locking members are provided on two side surfaces of the base.

An embodiment of (a) case where the locking members are provided on the front and back surfaces of the base is as described above using FIGS. 4 and 5, and an embodiment of (b) case where the locking members are provided on the back surface and the side surface is as described above using FIGS. 3 and 11.

Further, (c) case where the locking members are provided on the front surface and the side surface of the base is as described above using the second and fourth guide rails 22, 122 located below in FIGS. 4 and 5. Besides, it is also possible to employ a configuration of moving the work conveying pallet 11 between the second and fourth guide rails 22, 122 located below by arranging the fifth and sixth pallet moving parts 61, 161 at both end sides of the second and fourth guide rails 22, 122 and the first and second pallet feeding parts 31, 131.

Further, (d) case where the locking members are provided on two side surfaces of the base is as described above using FIG. 17. Besides, it is also possible to employ a configuration of moving the work conveying pallet 11 between the fifth and sixth guide rails 221, 321 by arranging the fifth and sixth pallet moving parts 61, 161 at both end sides of the fifth and sixth guide rails 221, 321 and the third and fourth pallet feeding parts 231,331.

The pallet conveying apparatus and the pallet conveying method in which any one of the first to six pallet moving parts 41, 141, 51, 151, 61 and 161 or the seventh pallet moving part 181 is arranged at the end parts of the first and second guide rails 21 22, the third and fourth guide rails 121, 122 and the fifth and sixth guide rail 221, 321 have been described in the above first and second embodiments.

Besides these embodiments, it is also possible to use a plurality of sets of guide rails with the first and second guide rails 21, 22, the third and fourth guide rails121, 122 or the fifth and sixth guide rails 221, 321 serving as one set. In this case, any one or a combination of the first to sixth pallet moving parts 41,141, 51, 151, 61 and 161 and the seventh pallet moving part 181 can be used at end parts of or between a plurality of sets of guide rails.

Specifically, in the present invention, the pallet conveying apparatus and a conveyance mode can be constructed according to the number of machine tools, work processing steps, a sequence thereof, a pallet return timing or the like.

## Claims

1. A pallet conveying apparatus (10, 100), comprising:
a work conveying pallet (11);
a plurality of guide rails (21, 22, 121, 122, 221, 321) configured such that the work conveying pallet (11) is movably mounted thereon;
a pallet feeding part (31, 131, 231, 331) configured to convey the work conveying pallet (11) along the plurality of guide rails (21, 22, 121, 122, 221, 321); and
a pallet moving part (41, 141, 51, 151, 61, 161, 181) configured to move the work conveying pallet (11) from one guide rail out of the plurality of guide rails (21, 22, 122, 221, 321) to another guide rail, wherein
the pallet feeding part (31, 131, 231, 331) includes a circulation belt (32, 132, 232, 332) provided along the plurality of guide rails (21, 22, 121, 122, 221, 321), the circulation belt (32, 132, 232, 332) being configured to circulate in a predetermined direction,
the work conveying pallet (11) includes:
a base (13) in the form of a flat plate having front and back principal surfaces and a plurality of side surfaces, the front and back principal surfaces being configured to carry a work; the pallet conveying apparatus (10, 100) is **characterized in that:**
locking members (14) are provided on at least two surfaces out of the front and back principal surfaces and the plurality of side surfaces of the base, the locking members (14) being configured to be locked to the circulation belt (32, 132, 232, 332);
the pallet feeding part (31, 131, 231, 331) is configured to convey the work conveying pallet (11) on the one guide rail with the locking member (14) provided on the one surface locked to the circulation belt (32, 132, 232, 332) and is configured to convey the work conveying pallet (11) on the other guide rail with the locking member (14) provided on the other surface locked to the circulation belt (32, 132, 232, 332); and
the pallet moving part (41, 141, 51, 151, 61, 161, 181) includes a short rail (42, 142, 52, 152, 62, 162, 182) configured such that the work conveying pallet is movably mounted thereon from the one guide rail and an auxiliary belt (47, 147, 57, 157, 67, 167, 192) configured to be locked to the locking member (14) provided on the other surface of the work conveying pallet (11) mounted on the short rail (42, 142, 52, 152, 62, 162, 182).

2. The pallet conveying apparatus (10) according to claim 1, wherein:
the plurality of guide rails (21, 22, 122, 221, 321) includes:
first and second guide rails (21, 22) spaced one above the other in a vertical direction; and
third and fourth guide rails (121, 122) respectively provided in parallel to the first and second guide rails (21, 22); and
the pallet moving part (41, 141, 51, 151, 61, 161, 181) includes:
first and third pallet moving parts (41, 51) provided at both end parts of the first and second guide rails (21, 22), the first and third pallet moving parts (41, 51) being configured to elevate and lower the work conveying pallet (11) between the first and second guide rails (21, 22);
second and fourth pallet moving parts (141, 151) provided at both end parts of the third and fourth guide rails (121, 122), the second and fourth pallet moving parts (141, 151) being configured to elevate and lower the work conveying pallet (11) between the third and fourth guide rails (121, 122); and
fifth and sixth pallet moving parts (61, 161) configured to horizontally move the work conveying pallet (11) between the first and third guide rails (21,121) located above or between the second and fourth guide rails (22,122) located below.

3. The pallet conveying apparatus (100) according to claim 1, wherein:
the plurality of guide rails (21, 22, 121, 122, 221, 321) includes:
first and second guide rails (21, 22) spaced one above the other in a vertical direction;
third and fourth guide rails (121, 122) respectively provided to be continuous to the first and second guide rails (21, 22); and
fifth and sixth guide rails (221, 321) spaced from and provided in parallel to the third guide rail (121) on the same plane;
the pallet moving part (41, 141, 51, 151, 61, 161, 181) includes:
a seventh pallet moving part (181) provided between the first and second guide rails (21, 22) and the third and fourth guide rails (121, 122), the seventh pallet moving part (181) being movable in a direction perpendicular to an extending direction of the first to sixth guide rails (21, 22, 121, 122, 221, 321) in a state carrying the work conveying pallet (11), the seventh pallet moving part (181) being configured to parallelly move or elevate and lower the work conveying pallet (11) between the first to sixth guide rails (21, 22, 121, 122, 221, 321); and
a eighth pallet moving part (181) provided at end sides of the third and fourth guide rails (121, 122) not facing the first and second guide rails (21, 22), the eighth pallet moving part (181) being movable in a direction perpendicular to the extending direction of the first to sixth guide rails (21, 22, 121, 122, 221, 321) in a state carrying the work conveying pallet, the eighth pallet moving part (181) being configured to parallelly move or elevate and lower the work conveying pallet (11) between the third to sixth guide rails (121, 122, 221, 321).

4. The pallet conveying apparatus (10, 100) according to claim 1, wherein the circulation belt (32, 132, 232, 332) and the auxiliary belt (47, 147, 57, 157, 67, 167, 192) are respectively locked to the locking member (14) provided on the one surface and the locking member (14) provided on the other surface with the work conveying pallet (11) located on a boundary between the one guide rail and the short rail (42, 142, 52, 152, 62, 162, 182).

5. The pallet conveying apparatus (10, 100) according to claim 1, wherein:
the work conveying pallet (11) further includes a linear motion block (12) provided on the base (13), the linear motion block (12) being configured to be movable on the plurality of guide rails (21, 22, 121, 122, 221, 321); and
the linear motion block (12) is configured to move on the one guide rail with the locking member (14) provided on the one surface locked to the circulation belt (32, 132, 232, 332) and is configured to move on the another guide rail with the locking member (14) provided on the another surface locked to the circulation belt (32, 132, 232, 332).

6. The pallet conveying apparatus (10, 100) according to claim 1, wherein the at least two surfaces include at least one surface out of the front and back principal surfaces of the base (13) and at least one surface out of the plurality of side surfaces.

7. The pallet conveying apparatus (10, 100) according to claim 1, wherein:
the circulation belt (32, 132, 232, 332) includes recesses and projections (32a, 32b, 132a, 132b, 232a, 232b, 332a, 332b) formed on one principal surface thereof, the recesses and projections (32a, 32b, 132a, 132b, 232a, 232b, 332a, 332b) being configured to engage with the locking members (14) of the work conveying pallet (11); and
the locking members (14) include projections and recesses (14a, 14b) configured to engage with the recesses and projections (32a, 32b, 132a, 132b, 232a, 232b, 332a, 332b) of the circulation belt (32, 132, 232, 332).

## Patentansprüche

1. Eine Palettenfördervorrichtung (10, 100), umfassend:
eine Werkstückförderpalette (11);
eine Vielzahl von Führungsschienen (21, 22, 121, 122, 221, 321), die so konfiguriert sind, dass die Werkstückförderpalette (11) beweglich darauf montiert ist;
einen Palettenzuführteil (31, 131, 231, 331), der konfiguriert ist, um die Werkstückförderpalette (11) entlang der Vielzahl von Führungsschienen (21, 22, 121, 122, 221, 321) zu befördern; und
ein Palettenbewegungsteil (41, 141, 51, 151, 61, 161, 181), der konfiguriert ist, um die Werkstückförderpalette (11) von einer Führungsschiene aus der Vielzahl von Führungsschienen (21, 22, 122, 221, 321) zu bewegen zu einer anderen Führungsschiene, wobei
der Palettenzuführteil (31, 131, 231, 331) ein Umlaufband (32, 132, 232, 332) umfasst, das entlang der Vielzahl von Führungsschienen (21, 22, 121, 122, 221, 321) angeordnet ist, wobei das Umlaufband (32, 132, 232, 332) konfiguriert ist, um in einer vorbestimmten Richtung zu zirkulieren,
die Werkstückförderpalette (11) umfasst:
eine Basis (13) in Form einer flachen Platte mit vorderen und hinteren Hauptoberflächen und einer Vielzahl von Seitenoberflächen, wobei die vorderen und hinteren Hauptoberflächen konfiguriert sind, um ein Werkstück zu tragen;
die Palettenfördervorrichtung (10, 100) ist **dadurch gekennzeichnet dass:**
Verriegelungselemente (14) auf mindestens zwei Oberflächen von den vorderen und hinteren Hauptflächen und der Vielzahl von Seitenflächen der Basis angeordnet sind, wobei die Verriegelungselemente (14) konfiguriert sind, um mit dem Umlaufband (32, 132, 232, 332) verriegelt zu sein;
der Palettenzuführteil (31, 131, 231, 331) konfiguriert ist, um die Werkstückförderpalette (11) auf der einen Führungsschiene zu fördern, wobei das Verriegelungselement (14) an der einen Oberfläche angeordnet ist, die mit dem Umlaufband (32, 132, 232, 332) verriegelt ist und konfiguriert ist, um die Werkstückförderpalette (11) auf der anderen Führungsschiene zu fördern, wobei das Verriegelungselement (14), das auf der anderen Oberfläche angeordnet ist, mit dem Umlaufband (32, 132, 232, 332) verriegelt ist; und
das Palettenbewegungsteil (41, 141, 51, 151, 61, 161, 181) eine kurze Schiene (42, 142, 52, 152, 62, 162, 182) umfasst, die so konfiguriert ist, dass die Werkstückförderpalette darauf beweglich von der einen Führungsschiene montiert ist, und ein Hilfsriemen (47, 147, 57, 157, 67, 167, 192) der dazu konfiguriert ist mit dem Verriegelungselement (14) verriegelt zu werden, das an der anderen Oberfläche der auf der kurzen Schiene (42, 142, 52, 152, 62, 162, 182) montierten Werkstückförderpalette (11) angeordnet ist.

2. Die Palettenfördervorrichtung (10) gemäß Anspruch 1, wobei:
die Vielzahl von Führungsschienen (21, 22, 122, 221, 321) umfasst:
erste und zweite Führungsschienen (21, 22), die in vertikaler Richtung übereinander beabstandet sind; und
dritte und vierte Führungsschienen (121, 122), die jeweils parallel zu den ersten und zweiten Führungsschienen (21, 22) angeordnet sind; und
der Palettenbewegungsteil (41, 141, 51, 151, 61, 161, 181) umfasst:
erste und dritte Palettenbewegungsteile (41, 51), die an beiden Endteilen der ersten und zweiten Führungsschiene (21, 22) angeordnet sind, wobei die ersten und dritten Palettenbewegungsteile (41, 51) konfiguriert sind, um die Werkstückfördepallette (11) zwischen den ersten und zweiten Führungsschienen (21, 22) anzuheben und abzusenken;
zweite und vierte Palettenbewegungsteile (141, 151), die an beiden Endteilen der dritten und vierten Führungsschiene (121, 122) angeordnet sind, wobei die zweiten und vierten Palettenbewegungsteile (141, 151) konfiguriert sind, um die Werkstückförderpalette (11) zwischen der dritten und vierten Führungsschiene (121, 122) anzuheben und abzusenken; und
fünfte und sechste Palettenbewegungsteile (61, 161), die konfiguriert sind, um die Werkstückförderpalette (11) zwischen den ersten und dritten Führungsschienen (21, 121), die sich oberhalb befinden, oder zwischen den zweiten und vierten Führungsschienen (22, 122), die sich darunter befinden, horizontal zu bewegen.

3. Die Palettenfördervorrichtung (100) gemäß Anspruch 1, wobei:
die Vielzahl von Führungsschienen (21, 22, 121, 122, 221, 321) umfasst:
erste und zweite Führungsschienen (21, 22), die in vertikaler Richtung übereinander beabstandet sind;
dritte und vierte Führungsschienen (121, 122), die jeweils kontinuierlich zu den ersten und zweiten Führungsschienen (21, 22) angeordnet sind; und
fünfte und sechste Führungsschiene (221, 321) die beabstandet und parallel zur dritten Führungsschiene (121) in derselben Ebene angeordnet sind;
der Palettenbewegungsteil (41, 141, 51, 151, 61, 161, 181) umfasst:
einen siebten Palettenbewegungsteil (181), der zwischen der ersten und zweiten Führungsschiene (21, 22) und der dritten und vierten Führungsschiene (121, 122) angeordnet ist, wobei der siebte Palettenbewegungsteil (181) in einem die Werkstückförderpalette (11) tragenden Zustand, in einer Richtung senkrecht zur Erstreckungsrichtung der ersten bis sechsten Führungsschiene (21, 22, 121, 122, 221, 321) beweglich ist, wobei das siebte Palettenbewegungsteil (181) konfiguriert ist, um die Werkstückförderpalette (11) parallel zu bewegen oder sie zwischen den ersten bis sechsten Führungsschienen (21, 22, 121, 122, 221, 321) anzuheben und abzusenken; und
ein achtes Palettenbewegungsteil (181), das an Endseiten der dritten und vierten Führungsschienen (121, 122) angeordnet ist, die nicht den ersten und zweiten Führungsschienen (21, 22) zugewandt sind, wobei das achte Palettenbewegungsteil (181) in einem die Werkstückförderpalette (11) tragenden Zustand, in eine Richtung senkrecht zur Erstreckungsrichtung der ersten bis sechsten Führungsschienen (21, 22, 121, 122, 221, 321) beweglich ist, wobei der achte Palettenbewegungsteil (181) konfiguriert ist, um die Werkstückförderpalette (11) parallel zu bewegen oder sie zwischen den dritten bis sechsten Führungsschienen (21, 22, 121, 122, 221, 321) anzuheben und abzusenken.

4. Die Palettenfördervorrichtung (100) gemäß Anspruch 1, wobei:
das Umlaufband (32, 132, 232, 332) und das Hilfsband (47, 147, 57, 157, 67, 167, 192) jeweils mit dem an der einen Fläche angeordneten Verriegelungselement (14) und dem an der anderen Fläche angeordneten Verriegelungselement (14) der Werkstückförderpalette (11) verriegelt sind, die sich an einer Grenze zwischen der einen Führungsschiene und der kurzen Schiene (42, 142, 52, 152, 62, 162, 182) befinden.

5. Die Palettenfördervorrichtung (100) gemäß Anspruch 1, wobei:
die Werkstückförderpalette (11) ferner einen Linearbewegungsblock (12) umfasst, der an der Basis (13) angeordnet ist, wobei der Linearbewegungsblock (12) konfiguriert ist, um auf der Vielzahl von Führungsschienen (21, 22, 121, 122, 221, 321) beweglich zu sein; und
der Linearbewegungsblock (12) so konfiguriert ist, dass er sich auf der einen Führungsschiene, an der das Verriegelungselement (14) an der einen Oberfläche angeordnet ist, die mit dem Umlaufband (32, 132, 232, 332) verriegelt ist, bewegt und konfiguriert ist, sich auf der anderen Führungsschiene, an der das Verriegelungselement (14), an der anderen Oberfläche angeordnet ist, die mit dem Umlaufband (32, 132, 232, 332) verriegelt ist, bewegt.

6. Die Palettenfördervorrichtung (100) gemäß Anspruch 1, wobei:
die mindestens zwei Oberflächen mindestens eine Oberfläche aus den vorderen und hinteren Hauptoberflächen der Basis (13) und mindestens eine Oberfläche aus der Vielzahl von Seitenoberflächen umfassen.

7. Die Palettenfördervorrichtung (100) gemäß Anspruch 1, wobei:
das Umlaufband (32, 132, 232, 332) Vertiefungen und Vorsprünge (32a, 32b, 132a, 132b, 232a, 232b, 332a, 332b) umfasst, die auf einer Hauptfläche davon ausgebildet sind, wobei die Vertiefungen und Vorsprünge (32a, 32b, 132a, 132b, 232a, 232b, 332a, 332b) konfiguriert sind, mit den Verriegelungselementen (14) der Werkstückförderpalette (11) in Eingriff zu kommen; und
die Verriegelungselemente (14) Vorsprünge und Vertiefungen (14a, 14b) umfassen, die konfiguriert sind, um mit den Vertiefungen und Vorsprüngen (32a, 32b, 132a, 132b, 232a, 232b, 332a, 332b) des Umlaufbandes (32, 132, 232, 332) in Eingriff zu kommen.

## Revendications

1. Appareil de convoyage de palette (10, 100), comprenant :
une palette de convoyage de travail (11) ;
une pluralité de rails de guidage (21, 22, 121, 122, 221, 321) configurés de telle sorte que la palette de convoyage de travail (11) y est montée de manière mobile ;
une partie d'alimentation de palette (31, 131, 231, 331) configurée pour convoyer la palette de convoyage de travail (11) le long de la pluralité de rails de guidage (21, 22, 121, 122, 221, 321) ; et
une partie de déplacement de palette (41, 141, 51, 151, 61, 161, 181) configurée pour déplacer la palette de convoyage de travail (11) d'un rail de guidage parmi la pluralité de rails de guidage (21, 22, 122, 221, 321) à un autre rail de guidage,
dans lequel
la partie d'alimentation de palette (31, 131, 231, 331) comprend une bande de circulation (32, 132, 232, 332) pourvue le long de la pluralité de rails de guidage (21, 22, 121, 122, 221, 321), la bande de circulation (32, 132, 232, 332) étant configurée pour circuler dans une direction prédéterminée,
la palette de convoyage de travail (11) comprend :
une base (13) sous forme d'une plaque plane ayant des surfaces principales avant et arrière et une pluralité de surfaces latérales, les surfaces principales avant et arrière étant configurées pour porter un travail ;
l'appareil de convoyage de palette (10, 100) est **caractérisé en ce que :**
des éléments de verrouillage (14) sont pourvus sur au moins deux surfaces parmi les surfaces principales avant et arrière et la pluralité de surfaces latérales de la base, les éléments de verrouillage (14) étant configurés pour être verrouillés sur la bande de circulation (32, 132, 232, 332) ;
la partie d'alimentation de palette (31, 131, 231, 331) est configurée pour convoyer la palette de convoyage de travail (11) sur ledit rail de guidage avec l'élément de verrouillage (14) pourvu sur ladite surface verrouillée sur la bande de circulation (32, 132, 232, 332) et est configurée pour convoyer la palette de convoyage de travail (11) sur l'autre rail de guidage avec l'élément de verrouillage (14) pourvu sur l'autre surface verrouillée sur la bande de circulation (32, 132, 232, 332) ; et
la partie de déplacement de palette (41, 141, 51, 151, 61, 161, 181) comprend un rail court (42, 142, 52, 152, 62, 162, 182) configuré de telle sorte que la palette de convoyage de travail y est montée de manière mobile depuis ledit rail de guidage, et une bande auxiliaire (47, 147, 57, 157, 67, 167, 192) configurée pour être verrouillée sur l'élément de verrouillage (14) pourvu sur ladite autre surface de la palette de convoyage de travail (11) montée sur le rail court (42, 142, 52, 152, 62, 162, 182).

2. Appareil de convoyage de palette (10) selon la revendication 1, dans lequel :
la pluralité de rails de guidage (21, 22, 122, 221, 321) comprend :
des premier et deuxième rails de guidage (21, 22) espacés l'un au-dessus de l'autre en direction verticale ; et
des troisième et quatrième rails de guidage (121, 122) respectivement pourvus parallèlement aux premier et deuxième rails de guidage (21, 22) ; et
la partie de déplacement de palette (41, 141, 51, 151, 61, 161, 181) comprend :
des première et troisième parties de déplacement de palette (41, 51) pourvues aux deux parties d'extrémité des premier et deuxième rails de guidage (21, 22), les première et troisième parties de déplacement de palette (41, 51) étant configurées pour lever et abaisser la palette de convoyage de travail (11) entre les premier et deuxième rails de guidage (21, 22) ;
des deuxième et quatrième parties de déplacement de palette (141, 151) pourvues aux deux parties d'extrémité des troisième et quatrième rails de guidage (121, 122), les deuxième et quatrième parties de déplacement de palette (141, 151) étant configurées pour lever et abaisser la palette de convoyage de travail (11) entre les troisième et quatrième rails de guidage (121, 122) ; et
des cinquième et sixième parties de déplacement de palette (61, 161) configurées pour déplacer la palette de convoyage de travail (11) horizontalement entre les premier et quatrième rails de guidage (21, 121) situés au-dessus ou entre les deuxième et quatrième rails de guidage (22, 122) situés au-dessous.

3. Appareil de convoyage de palette (100) selon la revendication 1, dans lequel :
la pluralité de rails de guidage (21, 22, 121, 122, 221, 321) comprend :
des premier et deuxième rails de guidage (21, 22) espacés l'un au-dessus de l'autre en direction verticale ;
des troisième et quatrième rails de guidage (121, 122) pourvus respectivement pour être continus avec les premier et deuxième rails de guidage (21, 22) ; et
des cinquième et sixième rails de guidage (221, 321) espacés par rapport au troisième rail de guidage (121) et parallèles à celui-ci dans le même plan ;
la partie de déplacement de palette (41, 141, 51, 151, 61, 161, 181) comprend :
une septième partie de déplacement de palette (181) pourvue entre les premier et deuxième rails de guidage (21, 22) et les troisième et quatrième rails de guidage (121, 122), la septième partie de déplacement de palette (181) étant mobile dans une direction perpendiculaire à une direction d'extension des premier à sixième rails de guidage (21, 22, 121, 122, 221, 321) dans un état de transport de la palette de convoyage de travail (11), la septième partie de déplacement de palette (181) étant configurée pour parallèlement déplacer ou lever et abaisser la palette de convoyage de travail (11) entre les premier à sixième rails de guidage (21, 22, 121, 122, 221, 321) ; et
une huitième partie de déplacement de palette (181) pourvue sur des côtés d'extrémité des troisième et quatrième rails de guidage (121, 122) qui ne font pas face aux premier et deuxième rails de guidage (21, 22), la huitième partie de déplacement de palette (181) étant mobile dans une direction perpendiculaire à la direction d'extension des premier à sixième rails de guidage (21, 22, 121, 122, 221, 321) dans un état de transport de la palette de convoyage de travail, la huitième partie de déplacement de palette (181) étant configurée pour parallèlement déplacer ou lever et abaisser la palette de convoyage de travail (11) entre les troisième à sixième rails de guidage (121, 122, 221, 321).

4. Appareil de convoyage de palette (10, 100) selon la revendication 1, dans lequel la bande de circulation (32, 132, 232, 332) et la bande auxiliaire (47, 147, 57, 157, 67, 167, 192) sont respectivement verrouillées sur l'élément de verrouillage (14) pourvu sur ladite surface et l'élément de verrouillage (14) pourvu sur l'autre surface, avec la palette de convoyage de travail (11) située à une délimitation entre ledit rail de guidage et le rail court (42, 142, 52, 152, 62, 162, 182).

5. Appareil de convoyage de palette (10, 100) selon la revendication 1, dans lequel :
la palette de convoyage de travail (11) comprend en outre un bloc de déplacement linéaire (12) pourvu sur la base (13), le bloc de déplacement linéaire (12) étant configuré pour être mobile sur la pluralité de rails de guidage (21, 22, 121, 122, 221, 321) ; et
le bloc de déplacement linéaire (12) est configuré pour se déplacer sur ledit rail de guidage avec l'élément de verrouillage (14) pourvu sur ladite surface verrouillée sur la bande de circulation (32, 132, 232, 332), et est configuré pour se déplacer sur ledit autre rail de guidage avec l'élément de verrouillage (14) pourvu sur ladite autre surface verrouillées sur la bande de circulation (32, 132, 232, 332).

6. Appareil de convoyage de palette (10, 100) selon la revendication 1, dans lequel lesdites au moins deux surfaces comprennent au moins une surface parmi les surfaces principales avant et arrière de la base (13) et au moins une surface parmi la pluralité de surfaces latérales.

7. Appareil de convoyage de palette (10, 100) selon la revendication 1, dans lequel :
la bande de circulation (32, 132, 232, 332) comprend des renfoncements et projections (32a, 32b, 132a, 132b, 232a, 232b, 332a, 332b) formés sur une surface principale de celle-ci, les renfoncements et projections (32a, 32b, 132a, 132b, 232a, 232b, 332a, 332b) étant configurés pour s'engager avec les éléments de verrouillage (14) de la palette de convoyage de travail (11) ; et
les éléments de verrouillage (14) comprennent des renfoncements et projections (14a, 14b) configurés pour s'engager avec les renfoncements et projections (32a, 32b, 132a, 132b, 232a, 232b, 332a, 332b) de la bande de circulation (32, 132, 232, 332).
